# EUROPEAN PATENT SPECIFICATION

(11) **EP 4 266 472 B1**
(45) Date of publication and mention of the grant of the patent: **08.04.2026**
(21) Application number: 21965899.4
(22) Date of filing: 30.11.2021
(51) Int. Cl.: H01M 50/383, H01M 10/04, H01M 50/358, H01M 50/209

(54) **BATTERY, ELECTRIC DEVICE, AND METHOD FOR MANUFACTURING BATTERY**
BATTERIE, ELEKTRISCHES GERÄT UND VERFAHREN ZUR HERSTELLUNG EINER BATTERIE
BATTERIE, DISPOSITIF ÉLECTRIQUE ET PROCÉDÉ DE FABRICATION D'UNE BATTERIE

(43) Date of publication of application: 25.10.2023
(73) Proprietor: Contemporary Amperex Technology (Hong Kong) Limited, Central, Central And Western District (HK)
(72) Inventor: HU, Langchao, Ningde, Fujian 352100 (CN); HUANG, Xiaoteng, Ningde, Fujian 352100 (CN); YANG, Haiqi, Ningde, Fujian 352100 (CN); XU, Chenyi, Ningde, Fujian 352100 (CN); WU, Xiaozhi, Ningde, Fujian 352100 (CN); WANG, Peng, Ningde, Fujian 352100 (CN); SUN, Zhanyu, Ningde, Fujian 352100 (CN)
(74) Representative: Gong, Jinping
(86) International application number: PCT/CN2021/134451
(87) International publication number: WO 2023/097456

(56) References cited:
- CN-A- 107 910 606
- CN-A- 112 018 462
- CN-A- 112 018 462
- CN-A- 112 072 046
- CN-A- 112 086 604
- KR-B1- 102 123 684
- US-A1- 2021 320 337

## Description

### TECHNICAL FIELD

This application relates to the field of battery technologies, and in particular, to a battery, an electric device, and a method for manufacturing battery.

### BACKGROUND

Energy conservation and emission reduction are crucial to sustainable development of the automobile industry. In this context, due to advantages of energy conservation and environmental protection, electric vehicles have become an important part of sustainable development of the automobile industry. For electric vehicles, battery technology is an important factor in connection with their development.

In the development of battery technology, apart from improving battery performance, safety issues are also significant and cannot be ignored. If the safety of a battery cannot be guaranteed, the battery cannot be used. Therefore, how safety performance of batteries is enhanced is an urgent technical problem that needs to be solved in battery technology. CN 112 018 462 describes a battery where the battery cell includes a pressure relief mechanism, an electric device, and a method and device for preparing a battery.

### SUMMARY

This present invention as defined by the appended claim set provides a battery, an electric device,a method for manufacturing battery, so as to enhance the safety of the battery.

According to a first aspect, a battery is provided, where the battery includes: a battery cell, where a pressure relief mechanism is provided on a first wall of the battery cell, the pressure relief mechanism is configured to actuate release of an internal pressure of the battery cell when the internal pressure or an internal temperature of the battery cell reaches a threshold; a fire-extinguishing pipeline, where the fire-extinguishing pipeline is configured to accommodate a fire-extinguishing medium, and the fire-extinguishing pipeline is configured to discharge the fire-extinguishing medium during actuation of the pressure relief mechanism; a first fastener, where the first fastener is fastened to a surface of the first wall of the battery cell away from the interior of the battery cell, and the first fastener is provided with a first limiting portion; and a second fastener, where the second fastener is provided on a side of the first fastener away from the battery cell, the second fastener is provided with a second limiting portion, and the second limiting portion cooperates with the first limiting portion to fasten the fire-extinguishing pipeline between the first fastener and the second fastener.

In the battery of the embodiments of this application, the first limiting portion and the second limiting portion cooperate with each other to fasten the fire-extinguishing pipeline between the first fastener and the second fastener, to be specific, the movement of the fire-extinguishing pipeline in a direction perpendicular to the first wall can be restricted and restrained by the cooperation of the first limiting portion and the second limiting portion, such that the fire-extinguishing pipeline is fastened. In this way, even if the battery vibrates, especially in the direction perpendicular to the first wall, under the restriction of the first limiting portion and the second limiting portion, the fire-extinguishing pipeline can be prevented from separating from its original installation position, and consequently the fire-extinguishing pipeline can be broken smoothly and accurately during the actuation of the pressure relief mechanism, so as to cool down the emissions discharged from the pressure relief mechanism in a timely manner, thereby enhancing the safety performance of the battery.

In some embodiments, the first limiting portion is a first slot structure, where the first slot structure includes a first slot wall and a second slot wall that are provided on a surface of the first fastener away from the battery cell, the first slot wall and the second slot wall being arranged along a first direction, and the first direction being perpendicular to an extension direction of the fire-extinguishing pipeline; and the second limiting portion is clamped between the first slot wall and the second slot wall.

The fastening of the first fastener and the second fastener can be achieved by providing the first slot structure and the second limiting portion clamped in the first slot structure, facilitating processing and assembly.

In some embodiments, a first limiting structure is provided on the first slot wall, a first protrusion is provided on a surface of the second limiting portion facing towards the first slot wall, and the first limiting structure cooperates with the first protrusion such that the second limiting portion is fitted to the first limiting portion; and/or a second limiting structure is provided on the second slot wall, a second protrusion is provided on a surface of the second limiting portion facing towards the second slot wall, and the second limiting structure cooperates with the second protrusion such that the second limiting portion is fitted to the first limiting portion.

The fastening of the first fastener and the second fastener can be achieved by the cooperation of the first limiting structure and the first protrusion or the cooperation of the second limiting structure and the second protrusion. Such simple structure facilitates processing and assembly.

In some embodiments, the first limiting structure is a first through hole provided in the first slot wall; and/or the second limiting structure is a second through hole provided in the second slot wall.

When the first limiting structure is a first through hole, the first protrusion is at least partially accommodated in the first through hole, such that the first limiting structure is fitted to the first protrusion, which is convenient for processing. Similarly, when the second limiting structure is a second through hole, the second protrusion is at least partially accommodated in the second through hole, such that the second limiting structure is fitted to the second protrusion, which is convenient for processing.

In some embodiments, the first limiting structure is a third protrusion provided on the first slot wall, where the third protrusion is provided at an end of the first slot wall away from the battery cell and protrudes towards the second limiting portion; and/or the second limiting structure is a fourth protrusion provided on the second slot wall, where the fourth protrusion is provided at an end of the second slot wall away from the battery cell and protrudes towards the second limiting portion.

The third protrusion is fitted to the first protrusion, and/or the fourth protrusion is fitted to the second protrusion, such that the first limiting portion and the second limiting portion can be fastened. This provides a simple structure and facilitates processing and assembly.

In some embodiments, a first inclined surface is provided at an end of the first protrusion close to the battery cell, a third inclined surface is provided at an end of the third protrusion far away from the battery cell, and the first inclined surface and the third inclined surface correspond to each other and are respectively inclined with respect to a plane in which the first wall is located; and/or a second inclined surface is provided at an end of the second protrusion close to the battery cell, a fourth inclined surface is provided at an end of the fourth protrusion far away from the battery cell, and the second inclined surface and the fourth inclined surface correspond to each other and are respectively inclined with respect to a plane in which the first wall is located.

The first inclined surface cooperates with the third inclined surface, and the second inclined surface cooperates with the fourth inclined surface, which allows the first limiting portion having the first protrusion/ or the second protrusion to be accurately and smoothly inserted into the first slot structure, increasing the assembly speed.

In some embodiments, the second limiting portion is a second slot structure, where the second slot structure includes a third slot wall and a fourth slot wall that are provided on a surface of the second fastener facing towards the battery cell, the third slot wall and the fourth slot wall being arranged along a first direction, and the first direction being perpendicular to an extension direction of the fire-extinguishing pipeline; and the first limiting portion is clamped between the third slot wall and the fourth slot wall.

The fastening of the first fastener and the second fastener can be achieved by providing the second slot structure and the first limiting portion clamped in the second slot structure, facilitating processing and assembly.

In some embodiments, the third slot wall is provided with a third limiting structure, a fifth protrusion is provided on a surface of the first limiting portion facing towards the third slot wall, and the third limiting structure cooperates with the fifth protrusion such that the second limiting portion is fitted to the first limiting portion; and/or the fourth slot wall is provided with a fourth limiting structure, a sixth protrusion is provided on a surface of the first limiting portion facing towards the fourth slot wall, and the fourth limiting structure cooperates with the sixth protrusion such that the second limiting portion is fitted to the first limiting portion.

The fastening of the first fastener and the second fastener can be achieved by the cooperation of the third limiting structure and the fifth protrusion or the cooperation of the fourth limiting structure and the sixth protrusion structure. Such simple structure facilitates processing and assembly.

In some embodiments, the third limiting structure is a third through hole provided in the third slot wall; and/or the fourth limiting structure is a fourth through hole provided in the fourth slot wall.

When the third limiting structure is a third through hole, the fifth protrusion is at least partially accommodated in the third through hole, such that the third limiting structure is fitted to the fifth protrusion, which is convenient for processing. Similarly, when the fourth limiting structure is a fourth through hole, the sixth protrusion is at least partially accommodated in the fourth through hole, such that the fourth limiting structure is fitted to the sixth protrusion, which is convenient for processing.

In some embodiments, the third limiting structure is a seventh protrusion provided on the third slot wall, where the seventh protrusion is provided at an end of the third slot wall facing towards the battery cell and protrudes towards the first limiting portion; and/or the fourth limiting structure is an eighth protrusion provided on the fourth slot wall, where the eighth protrusion is provided at an end of the fourth slot wall facing towards the battery cell and protrudes towards the first limiting portion.

The fifth protrusion is fitted to the seventh protrusion, and/or the sixth protrusion is fitted to the eighth protrusion, such that the first limiting portion and the second limiting portion can be fastened. This provides a simple structure and facilitates processing and assembly.

In some embodiments, a fifth inclined surface is provided at an end of the fifth protrusion far away from the battery cell, a seventh inclined surface is provided at an end of the seventh protrusion close to the battery cell, and the fifth inclined surface and the seventh inclined surface correspond to each other and are respectively inclined with respect to a plane in which the first wall is located; and/or a sixth inclined surface is provided at an end of the sixth protrusion far away from the battery cell, an eighth inclined surface is provided at an end of the eighth protrusion close to the battery cell, and the sixth inclined surface and the eighth inclined surface correspond to each other and are respectively inclined with respect to a plane in which the first wall is located.

The fifth inclined surface cooperates with the seventh inclined surface, and the sixth inclined surface cooperates with the eighth inclined surface, which allows the first limiting portion having the fifth protrusion/ or the sixth protrusion to be smoothly inserted into the second slot structure, increasing the assembly speed.

In some embodiments, the battery includes multiple battery cells arranged along a second direction, multiple first fasteners arranged along the second direction, and at least one second fastener, and the fire-extinguishing pipeline extends along the second direction.

The multiple first fasteners are provided to fasten the fire-extinguishing pipeline such that the fire-extinguishing pipeline is more stable.

In some embodiments, the battery includes multiple second fasteners, where the multiple second fasteners are in one-to-one correspondence with the multiple first fasteners. To be specific, the first fastener and the second fastener are arranged in pairs so as to facilitate processing. In addition, the multiple second fasteners do not affect each other during the assembly.

In some embodiments, the second fasteners correspond to the multiple first fasteners, so as to reduce the number of the second fasteners, thereby further improving the processing and assembly efficiency of the second fasteners.

In some embodiments, a stiffener is provided on a surface of the second fastener far away from the battery cell, which can enhance the strength of the second fastener such that the second fastener is less likely to be broken and damaged.

In some embodiments, the first fastener includes at least one pair of the first limiting portions, where each pair of the first limiting portions are spaced apart from each other in the first direction, and the first direction is perpendicular to the extension direction of the fire-extinguishing pipeline; and the second fastener includes at least one pair of the second limiting portions, where each pair of the second limiting portions are spaced apart from each other in the first direction, and the fire-extinguishing pipeline is provided between each pair of the first limiting portions and between each pair of the second limiting portions.

In this way, the movement of the fire-extinguishing pipeline along the first direction can be restricted and restrained to prevent the fire-extinguishing pipeline deviating from the pressure relief mechanism along the first direction during the use of the battery, thus ensuring the relative positions of the pressure relief mechanism and the fire-extinguishing pipeline, and ensuring that the fire-extinguishing pipeline can be accurately and timely broken during the actuation of the pressure relief mechanism, so as to achieve the effect of cooling.

In some embodiments, the second fastener includes multiple pairs of the second limiting portions arranged along the second direction, where the second direction is perpendicular to the first direction, a guide portion is provided between two adjacent pairs of the second limiting portions, and the guide portion is configured to guide installation of the second fastener, such that the second fastener can be quickly aligned with the first fastener during the installation, improving the installation efficiency.

In some embodiments, the second fastener includes a pair of the second limiting portions, where the second limiting portion extends along the second direction, and the second direction is perpendicular to the first direction.

In this way, each of the second limiting portions is arranged as an integrated structure extending along the second direction, thereby improving the processing efficiency.

In some embodiments, the battery cell includes an electrode terminal provided on the first wall, and the first fastener is provided with an accommodating portion, where the accommodating portion is configured to accommodate the electrode terminal.

In this way, the first fastener neither blocks the electrode terminal nor affects the electrical connection between the electrode terminals through a busbar. In addition, relative fastening between the first fastener and the first wall can also be achieved through the electrode terminal.

According to a second aspect, an electric device is provided, including the battery according to any one of the first aspect or the embodiments of the first aspect.

In some embodiments, the electric device may be a vehicle, a ship, or a spacecraft.

According to a third aspect, a method for manufacturing battery is provided, including: providing a battery cell, where a pressure relief mechanism is provided on a first wall of the battery cell, the pressure relief mechanism is configured to actuate release of an internal pressure of the battery cell when the internal pressure or an internal temperature of the battery cell reaches a threshold; providing a fire-extinguishing pipeline, where the fire-extinguishing pipeline is configured to accommodate a fire-extinguishing medium, and the fire-extinguishing pipeline is configured to discharge the fire-extinguishing medium during actuation of the pressure relief mechanism; providing a first fastener, where the first fastener is fastened to a surface of the first wall of the battery cell away from the interior of the battery cell, and the first fastener is provided with a first limiting portion; and providing a second fastener, where the second fastener is provided on a side of the first fastener away from the battery cell, the second fastener is provided with a second limiting portion, and the second limiting portion cooperates with the first limiting portion to fasten the fire-extinguishing pipeline between the first fastener and the second fastener.

According to a non-claimed aspect, a device for manufacturing battery is provided. The device includes modules for performing the method according to the third aspect.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic partial structural exploded view of a battery according to an embodiment of this application;
FIG. 4 is a schematic partial top view of a battery according to an embodiment of this application;
FIG. 5 is a schematic partial structural exploded view of another battery according to an embodiment of this application;
FIG. 6 is a schematic partial top view of another battery according to an embodiment of this application;
FIG. 7 is a schematic partial structural exploded view of still another battery according to an embodiment of this application;
FIG. 8 is a schematic partial top view of still another battery according to an embodiment of this application;
FIG. 9 is a schematic structural diagram of a first fastener according to an embodiment of this application;
FIG. 10 is an enlarged view at region D in FIG. 9;
FIG. 11 is a schematic structural diagram of a second fastener according to an embodiment of this application;
FIG. 12 is a schematic structural diagram of another second fastener according to an embodiment of this application;
FIG. 13 is a schematic partial cross-sectional view of exploded structures of a first fastener, fire-extinguishing pipeline, and second fastener according to an embodiment of this application;
FIG. 14 is a schematic partial cross-sectional view of the first fastener, fire-extinguishing pipeline, and second fastener that are mounted on a first wall shown in FIG. 13;
FIG. 15 is a schematic structural diagram of still another second fastener according to an embodiment of this application;
FIG. 16 is a schematic structural diagram of still another second fastener according to an embodiment of this application;
FIG. 17 is a schematic structural diagram of another first fastener according to an embodiment of this application;
FIG. 18 is an enlarged view at region E in FIG. 17;
FIG. 19 is a schematic partial cross-sectional view of exploded structures of another first fastener, fire-extinguishing pipeline, and second fastener according to an embodiment of this application;
FIG. 20 is a schematic partial cross-sectional view of another first fastener, fire-extinguishing pipeline, and second fastener that are mounted on a first wall according to an embodiment of this application;
FIG. 21 is a schematic structural diagram of still another second fastener according to an embodiment of this application;
FIG. 22 is a schematic structural diagram of still another first fastener according to an embodiment of this application;
FIG. 23 is a schematic partial cross-sectional view of exploded structures of still another first fastener, fire-extinguishing pipeline, and second fastener according to an embodiment of this application;
FIG. 24 is a schematic partial cross-sectional view of still another first fastener, fire-extinguishing pipeline, and second fastener that are mounted on a first wall according to an embodiment of this application;
FIG. 25 is a schematic flowchart of a method for manufacturing battery according to an embodiment of this application; and
FIG. 26 is a schematic block diagram of a device for manufacturing battery according to a non-claimed embodiment of this application. The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be a wound structure or a stacked structure. However, the embodiments of this application are not limited thereto.

For the development of battery technologies, many design factors need to be considered, for example, performance parameters such as energy density, cycle life, discharge capacity, and charge and discharge rate, as well as safety of the battery.

For a battery cell, main safety hazards are in the charging and discharging processes. In addition, a suitable ambient temperature also needs to be designed. To effectively avoid unnecessary losses, multiple protection measures are usually provided for battery cells. Specifically, the protection measures include at least one or more of a switch component, selection of an appropriate separator material, and a pressure relief mechanism. The switch component refers to an element that can stop charging or discharging of the battery when temperature or resistance in the battery cell reaches a specified threshold. The separator is configured to separate the positive electrode plate and the negative electrode plate. Micronscale (even nanoscale) micropores attached to the separator can be automatically dissolved when temperature of the separator rises to a specified value, such that metal ions cannot pass through the separator, and an internal reaction in the battery cell is terminated. The pressure relief mechanism is an element or part that is actuated when internal pressure or temperature of the battery cell reaches a predetermined threshold, so as to release the internal pressure or temperature.

The pressure relief mechanism in the battery cell greatly influences the safety of the battery. For example, when a short circuit, overcharging, or the like occurs, thermal runaway may be caused inside the battery cell, resulting in a sudden rise in pressure or temperature. In this case, the pressure relief mechanism can be actuated to release the internal pressure and temperature to the outside, thus preventing the battery cell from exploding and catching fire.

The design of the pressure relief mechanism is primarily concerned with release of the high pressure and heat inside the battery cell, to be specific, discharging the emissions to the outside of the battery cell. The high-temperature and high-pressure emissions are discharged toward a direction in which the pressure relief mechanism of the battery cell is provided, and more specifically, may be discharged toward a region in which the pressure relief mechanism is actuated. The influence and collapsing force of such emissions may be great, and may even be enough to break through one or more structures in that direction, causing further safety issues.

In view of this, a fire-extinguishing pipeline can be provided at a position corresponding to the pressure relief mechanism of the battery cell, and the emissions discharged from the battery cell during the actuation of the pressure relief mechanism can pass through and break the fire-extinguishing pipeline, such that the fire-extinguishing medium in the fire-extinguishing pipeline can be discharged from the place at which the fire-extinguishing pipeline is broken, and the emissions discharged from the pressure relief mechanism can be cooled down so as to reduce the hazard of the emissions, thereby enhancing the safety of the battery.

To enable the fire-extinguishing pipeline to be broken during the actuation of the pressure relief mechanism and to cool down the emissions discharged from the pressure relief mechanism in a timely manner, the position of the fire-extinguishing pipeline should correspond to the position of the pressure relief mechanism. However, in the actual use of the battery, the battery may vibrate. Therefore, how the fire-extinguishing pipeline is installed and fastened inside the box of the battery is an extremely important issue.

Therefore, an embodiment of this application provides a battery. The battery includes multiple battery cells and a fire-extinguishing pipeline, where a pressure relief mechanism is provided on a first wall of the battery cell; and the battery further includes a first fastener and a second fastener, where the first fastener is fastened to a surface of the first wall of the battery cell away from the interior of the battery cell, the second fastener is provided on a side of the first fastener away from the battery cell, the first fastener is provided with a first limiting portion, and the second fastener is provided with a second limiting portion. The first limiting portion and the second limiting portion cooperate with each other to fasten the fire-extinguishing pipeline between the first fastener and the second fastener, to be specific, the movement of the fire-extinguishing pipeline in a direction perpendicular to the first wall can be restricted and restrained by the cooperation of the first limiting portion and the second limiting portion, such that the fire-extinguishing pipeline is fastened. In this way, even if the battery vibrates, especially in the direction perpendicular to the first wall, under the restriction of the first limiting portion and the second limiting portion, the fire-extinguishing pipeline can be prevented from separating from its original installation position and the fire-extinguishing pipeline can be broken smoothly and accurately during the actuation of the pressure relief mechanism, so as to cool down the emissions discharged from the pressure relief mechanism in a timely manner, thereby enhancing the safety performance of the battery.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

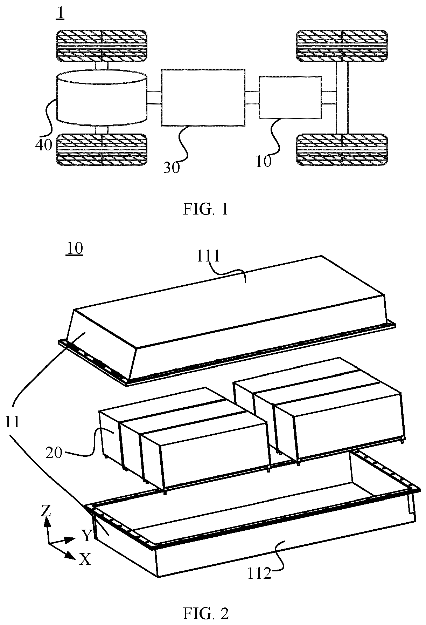

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery.

For example, FIG. 2 is a schematic structural diagram of a battery 10 according to an embodiment of this application. The battery 10 may include multiple battery cells 20. The multiple battery cells 20 are arranged in an array. The battery 10 may further include a box 11 with a hollow structure inside the box 11, where the multiple battery cells 20 are accommodated within the box 11, and the box 11 may be shaped according to the multiple battery cells 20 accommodated. In some embodiments, the box may be a cuboid with six walls. FIG. 2 shows a possible implementation of the box 11 in the embodiments of this application. As shown in FIG. 2, the box 11 may include two portions that are referred as a first portion 111 and a second portion 112 respectively, and the first portion 111 and the second portion 112 are snap-fitted. Shapes of the first portion 111 and the second portion 112 may be determined based on a shape of the combination of the battery cells 20. At least one of the first portion 111 and the second portion 112 is provided with an opening. For example, as shown in FIG. 2, the first portion 111 and the second portion 112 each may be a hollow cuboid and have only one face with an opening, where an opening of the first portion 111 and an opening of the second portion 112 are opposite each other, and the first portion 111 and the second portion 112 are snap-fitted to form a box 11 having an enclosed chamber.

For another example, unlike FIG. 2, it is possible that only one of the first portion 111 and the second portion 112 is a hollow cuboid with an opening, and the other may be a plate for covering the opening. For example, an example is used where the second portion 112 is a hollow cuboid and has only one face with an opening and the first portion 111 is a plate. Therefore, the first portion 111 covers the opening of the second portion 112 to form a box 11 with an enclosed chamber. The chamber may be configured for accommodating the multiple battery cells 20. The multiple battery cells 20 are connected in parallel, series, or series-parallel, and then put into the box 11 formed after the first portion 111 and the second portion 112 are snap-fitted.

Optionally, the battery 10 may further include other structures. Details are not described herein. For example, the battery 10 may further include a busbar, where the busbar is configured to implement an electrical connection among multiple battery cells 20, for example, a parallel connection, a series connection, or a series-parallel connection. Specifically, the busbar may implement the electrical connection among the battery cells 20 by connecting electrode terminals of the battery cells 20. Further, the busbar may be fixed to the electrode terminal of the battery cell 20 by welding. Electrical energy of the multiple battery cells 20 may be further led out through a conductive mechanism that passes through the box 11.

Depending on different power needs, the battery cells 20 in the battery 10 may be provided in any quantity. The multiple battery cells 20 may be connected in series, parallel, or series-parallel to achieve greater capacity or power. Because each battery 10 may include a large number of battery cells 20, for ease of installation, the battery cells 20 may alternatively be provided in groups, and each group of battery cells 20 form a battery module. The number of battery cells 20 included in the battery module is not limited, and may be set according to requirements. A battery may include multiple battery modules. These battery modules may be connected in series, parallel, or series-parallel.

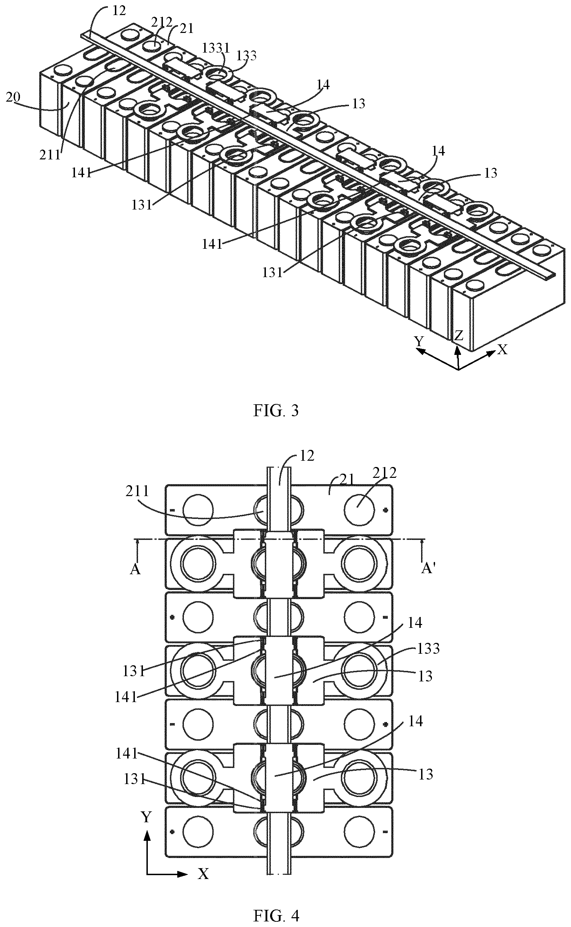

FIG. 3 is a schematic partial structural exploded view of the battery 10 according to this embodiment of this application. FIG. 4 is a schematic partial top view of the battery 10 corresponding to FIG. 3. As shown in FIG. 3 and FIG. 4, the battery 10 of this embodiment of this application includes: a battery cell 20, a fire-extinguishing pipeline 12, a first fastener 13, and a second fastener 14. Specifically, a pressure relief mechanism 211 is provided on a first wall 21 of the battery cell 20, and the pressure relief mechanism 211 is configured to actuate release of an internal pressure of the battery cell 20 when the internal pressure or an internal temperature of the battery cell 20 reaches a threshold. The fire-extinguishing pipeline 12 is configured to accommodate a fire-extinguishing medium, and the fire-extinguishing pipeline 12 is configured to discharge the fire-extinguishing medium during actuation of the pressure relief mechanism 211. The first fastener 13 is fastened to a surface of the first wall 21 of the battery cell 20 away from the interior of the battery cell 20, and the first fastener 13 is provided with a first limiting portion 131. The second fastener 14 is provided on a side of the first fastener 13 away from the battery cell 20, the second fastener 14 is provided with a second limiting portion 141, and the second limiting portion 141 cooperates with the first limiting portion 131 to fasten the fire-extinguishing pipeline 12 between the first fastener 13 and the second fastener 14.

The battery cell 20 of this embodiment of this application may be a hollow polyhedral structure, and the first wall 21 may be any one of walls of the battery cell 20. For example, as shown in FIG. 3 and FIG. 4, this application mainly uses the first wall 21 as a wall with the smallest area of the battery cell 20 as an example. However, the embodiments of this application are not limited thereto.

In this embodiment of this application, the pressure relief mechanism 211 is provided on the first wall 21, and pressure relief mechanism 211 can be actuated when the internal pressure or temperature of the battery cell 20 reaches a threshold so as to release the internal pressure and reduce the internal temperature. Therefore, the first wall 21 is typically not provided as a wall where two battery cells 20 are attached to each other. For example, as shown in FIG. 3 and FIG. 4, if two adjacent battery cells 20 can be attached to each other via a wall with the largest area, the first wall 21 provided with the pressure relief mechanism 211 is not the wall with the largest area; conversely, if two adjacent battery cells 20 are attached to each other via another wall, the first wall 21 provided with the pressure relief mechanism 211 can be provided as the wall with the largest area.

It should be understood that the pressure relief mechanism 211 of this application is configured to be actuated when the internal temperature or pressure of the battery cell 20 reaches a threshold value, where the threshold may be set to different values depending on different needs of the practical application. For example, the threshold may depend on the material used for one or more of a positive electrode plate, a negative electrode plate, an electrolyte, and a separator in the battery cell 20. In addition, the pressure relief mechanism 211 may be in a form of an explosion-proof valve, a gas valve, a pressure relief valve, a safety valve, or the like, and may specifically employ an element or part sensitive to pressure or temperature. To be specific, when the internal pressure or temperature of the battery cell 20 reaches the predetermined threshold, the pressure relief mechanism 211 performs an action or a weak structure provided in the pressure relief mechanism 211 is destroyed, thereby forming an opening or a channel for releasing the internal pressure or temperature.

"Actuate" mentioned in this application means that the pressure relief mechanism 211 is put into action or is activated to a given state such that the internal pressure and temperature of the battery cell 20 are released. The action that the pressure relief mechanism 211 is put into may include but is not limited to, for example, cracking, breaking, tearing, or opening at least part of the pressure relief mechanism 211. During actuation of the pressure relief mechanism 211, high-temperature and high-pressure substances inside the battery cell 20 are discharged as emissions from an actuated site. In this way, the battery cell 20 can release its pressure under a condition of controllable pressure or temperature, thereby avoiding more serious potential accidents.

The emissions from the battery cell 20 mentioned in this application include but are not limited to: electrolyte, fragments of positive and negative electrode plates and separator that are dissolved or disrupted, and high-temperature and high-pressure gases and flames produced by reactions.

The fire-extinguishing pipeline 12 in this embodiment of this application is configured to accommodate the fire-extinguishing medium, where the fire-extinguishing medium herein may be a fluid, and the fluid may be liquid or gas. The fire-extinguishing pipeline 12 can discharge the fire-extinguishing medium during the actuation of the pressure relief mechanism 211. For example, the fire-extinguishing pipeline 12 can be provided corresponding to the pressure relief mechanism 211 such that during actuation of the pressure relief mechanism 211, the fire-extinguishing pipeline 12 can be broken, the fire-extinguishing medium inside it can flow out, and the emissions discharged from the pressure relief mechanism 211 can be cooled down so as to avoid thermal diffusion of a battery cells 20 in thermal runaway, enhancing the safety of the battery 10.

In addition, when the pressure relief mechanism 211 does not break the fire-extinguishing pipeline 12, the fire-extinguishing pipeline 12 may accommodate no substances. When the pressure relief mechanism 211 is actuated, the fire-extinguishing pipeline 12 accommodates the fire-extinguishing medium, for example, a valve may be switched on or off to control the fire-extinguishing medium to enter the fire-extinguishing pipeline 12. Alternatively, when the pressure relief mechanism 211 is not broken, the fire-extinguishing pipeline 12 may always accommodate the fire-extinguishing medium, and the fire-extinguishing medium may also be used to adjust temperature of the battery cell 20. To adjust temperature means to heat or cool the multiple battery cells 20. In a case of cooling or lowering temperature of the battery cells 20, the fire-extinguishing pipeline 12 is configured to accommodate cooling fluid to lower temperature of the multiple battery cells 20. In this case, the fire-extinguishing pipeline 12 may also be referred to as a cooling part, a cooling system, a cooling pipeline, or the like, and the fire-extinguishing medium accommodated therein may also be referred to as a cooling medium or cooling fluid, and more specifically, cooling liquid or cooling gas. Optionally, the fire-extinguishing medium may circulate, to implement a better temperature adjustment effect. Optionally, the fire-extinguishing medium may be water, mixed liquid of water and glycol, air, or the like.

The first fastener 13 in this embodiment of this application is provided with a first limiting portion 131, and the second fastener 14 is provided with a second limiting portion 141. The first limiting portion 131 and the second limiting portion 141 can cooperate with each other, for example, the first limiting portion 131 and the second limiting portion 141 can be mutually fitted by providing a depression and a protrusion, or can be mutually inserted by providing a protrusion and a through hole, such that the first fastener 13 and the second fastener 14 are relatively fastened. Further, the fire-extinguishing pipeline 12 can be fastened between the first fastener 13 and the second fastener 14 to restrict and restrain the movement of the fire-extinguishing pipeline 12 in the direction perpendicular to the first wall 21, thereby fastening the fire-extinguishing pipeline 12. In this way, even if the battery 10 vibrates, especially in the direction perpendicular to the first wall 21, under the restriction of the first limiting portion 131 and the second limiting portion 141, the fire-extinguishing pipeline 12 can be prevented from separating from its original installation position, particularly, the fire-extinguishing pipeline 12 can be prevented from deviating from or moving away from the position corresponding to the pressure relief mechanism 211 and the fire-extinguishing pipeline 12 can be broken smoothly and accurately during the actuation of the pressure relief mechanism 211, so as to cool down the emissions discharged from the pressure relief mechanism 211 in a timely manner, thereby enhancing the safety performance of the battery 10.

It should be understood that the battery cell 20, the fire-extinguishing pipeline 12, the first fastener 13, and the second fastener 14 as shown in FIG. 3 and FIG. 4 can all be arranged inside the battery 10, for example, inside the box 11 of the battery 10. Moreover, the box 11 of the battery 10 in this embodiment of this application can also be configured to accommodate other components. For example, the box 11 may further be provided with a structure for fastening the battery cell 20. For example, the box 11 may further be configured to accommodate a busbar, where the busbar may be configured to implement an electrical connection among multiple battery cells 20, for example, a parallel connection, a series connection, or a series-parallel connection. The busbar may implement the electrical connection among the battery cells 20 by connecting the electrode terminals 212 of the battery cells. In some embodiments, the busbar may be fixed to the electrode terminals 212 of battery cells 20 by welding.

It should be understood that each of the battery cells 20 of this embodiment of this application may include two electrode terminals 212, where the two electrode terminals 212 may be provided on any one or more walls of the battery cell 20. For example, the two electrode terminals 212 may be provided on one wall or on two different walls; and any one of the electrode terminals 212 and the pressure relief mechanism 211 may be provided on one wall or may be provided on different walls. As shown in FIG. 3 and FIG. 4, in this embodiment of this application the two electrode terminals 212 being both provided on the first wall 21 is used as an example for illustration.

Specifically, the first wall 21 is typically a flat plate, two electrode terminals 212 of one battery cell 20 are fixed on the flat plate surface, and the two electrode terminals 212 are a positive electrode terminal and a negative electrode terminal. Each electrode terminal 212 is correspondingly provided with a connecting member, or referred to as a current collecting member located between the first wall 21 and an electrode assembly inside the battery cell 20 for electrically connecting the electrode assembly and the electrode terminal 212. For example, one or more electrode assemblies may be provided inside the battery cell 20, and each electrode assembly has two tabs with opposite polarities. For example, when a first tab of the two tabs is a positive electrode tab, a second tab of the two tabs is a negative electrode tab. The first tab of the one or more electrode assemblies is connected to one electrode terminal 212 through one connecting member, for example, connected to the positive electrode terminal, and the second tab of the one or more electrode assemblies is connected to the other electrode terminal through the other connecting member, for example, connected to the negative electrode terminal.

In this embodiment of this application, the first fastener 13 is provided with an accommodating portion 133, where the accommodating portion 133 is configured to accommodate the electrode terminal 212. Specifically, the first fastener 13 is provided on a surface of the first wall 21 away from the interior of the battery cell 20, and under the condition that an electrode terminal 212 is provided on the first wall 21, the accommodating portion 133 can be provided to avoid the electrode terminal 212. As shown in FIG. 3 and FIG. 4, the accommodating portion 133 may include a through hole 1331 such that the electrode terminal 212 can pass through the through hole 1331 and the accommodating portion 133 surrounds the electrode terminal 212. In this way, a surface of an end of the electrode terminal 212 far away from the battery cell 20 is exposed. The busbar may connect the electrode terminals 212 of the multiple battery cells 20 by welding, thus implementing the electrical connection of the multiple battery cells 20. In addition, the first fastener 13 may further be relatively fastened to the battery cell 20 through the accommodating portion 133.

Optionally, as shown in FIG. 3 and FIG. 4, each electrode terminal 212 is typically cylindrical, and correspondingly, the through hole 1331 of the accommodating portion 133 may also be provided as a circular through hole for accommodating the electrode terminal 212.

It should be understood that this battery 10 of this embodiment of this application may include multiple battery cells 20 arranged along the second direction Y. Each battery cell 20 has a pressure relief mechanism 211 provided on the first wall 21, and the fire-extinguishing pipeline 211 is provided corresponding to the pressure relief mechanism 211, such that the fire-extinguishing pipeline 211 may be provided as an elongated pipeline extending along the second direction Y. Correspondingly, to fasten the fire-extinguishing pipeline 211, the battery 10 may include one or more first fasteners 13, and the battery 10 may further include one or more second fasteners 14.

In some embodiments, the battery 10 includes multiple battery cells 20 arranged along a second direction Y, multiple first fasteners 13 arranged along the second direction Y, and at least one second fastener 14. As shown in FIG. 3 and FIG. 4, when the battery 10 includes multiple battery cells 20 arranged along the second direction Y, the fire-extinguishing pipeline 12 is typically elongated. Therefore, with multiple first fasteners 13 provided to fasten the fire-extinguishing pipeline 12, the fire-extinguishing pipeline 12 is more stable. In addition, considering that each battery cell 20 includes two electrode terminals 212, accordingly, each first fastener 13 is correspondingly provided on the first wall 21 of one battery cell 20, and each first fastener 13 includes two accommodating portions 133 for accommodating the electrode terminals 212, respectively, which can make each first fastener 13 be stably fastened to the corresponding battery cell 20 and can also facilitate processing and installation of the first fastener 13.

In some embodiments, the number of the multiple first fasteners 13 may be configured depending on actual application. For example, as shown in FIG. 3 and FIG. 4, the number of the first fasteners 13 is typically configured to be smaller than the number of the battery cells 20 in the second direction Y. Specifically, an area of the first wall 21 of the battery cell 20 is limited, and the first fastener 13 is provided with an accommodating portion 133 for accommodating the electrode terminals 212. If the first fasteners 13 are provided in one-to-one correspondence with the multiple battery cells 20, the area of the first fastener 13 is limited to a large extent, which is not conducive to processing and assembly. Therefore, in the second direction Y, the number of the first fasteners 13 is usually configured to be smaller than the number of the battery cells 20, such that there can be a spacing between two adjacent first fasteners 13. For example, at least one battery cell 20 is sandwiched between two adjacent first fasteners 13, such that the installation of the multiple first fasteners 13 is not affected and assembly of the multiple first fasteners 13 is facilitated.

Corresponding to the first fastener 13, the battery 10 of this embodiment of this application may include at least one second fastener 14, where each second fastener 14 may correspond to one or more first fasteners 13. Detailed description is provided below with reference to the accompanying drawings.

In some embodiments, the battery 10 includes multiple second fasteners 14, where the multiple second fasteners 14 are in one-to-one correspondence with the multiple first fasteners 13. As shown in FIG. 3 and FIG. 4, along the second direction Y, the battery 10 includes multiple first fasteners 13 and the same number of second fasteners 14, to be specific, the first fasteners 13 and the second fasteners 14 are configured in pairs so as to facilitate processing, and the multiple second fasteners 14 are assembled without affecting each other. The multiple first fasteners 13 and the multiple second fasteners 14 may also be configured in a relatively uniform manner, such that parts of the fire-extinguishing pipeline 12 can be evenly restrained, enhancing the stability of the battery 10.

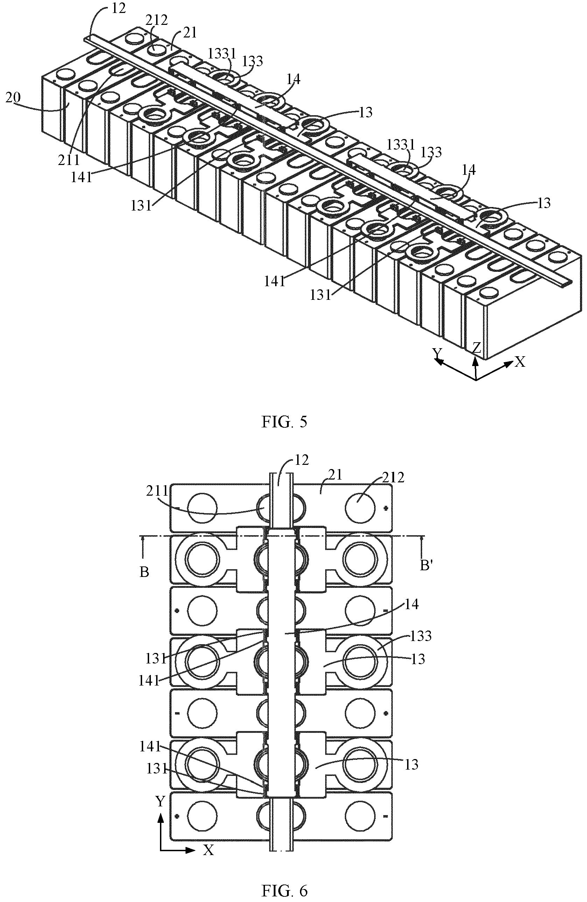

In some embodiments, each second fastener 14 corresponds to multiple first fasteners 13. FIG. 5 is another schematic partial structural exploded view of the battery 10 according to this embodiment of this application. FIG. 6 is another schematic partial top view of the battery 10 corresponding to FIG. 5. As shown in FIG. 5 and FIG. 6, the second fastener 14 is provided on a side of the first fastener 13 away from the battery cell 20, with less influence on the components on the first wall 21 of the battery cell 20, so the multiple first fasteners 13 can correspond to one second fastener 14 where the second fastener 14 extends along the second direction Y so as to reduce the number of second fasteners 14 and thus improve the processing and assembly efficiency of the second fasteners 14.

It should be understood that the number of first fasteners 13 corresponding to each second fastener 14 can be flexibly configured depending on actual application, and that the number of first fasteners 13 corresponding to multiple second fasteners 14 may be the same or different. For example, as shown in FIG. 5 and FIG. 6, two second fasteners 14 each correspond to the same number of first fasteners 13, and each second fastener 14 corresponds to three first fasteners 13. However, the embodiments of this application are not limited thereto.

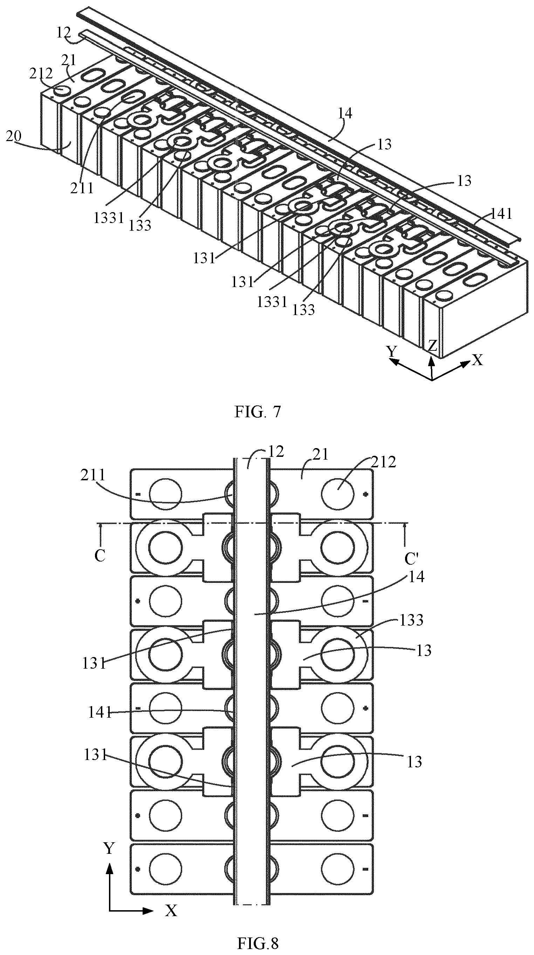

Further, along the second direction Y, only one second fastener 14 may be provided, where the second fastener 14 corresponds to all of the first fasteners 13. FIG. 7 is still another schematic partial structural exploded view of the battery 10 according to this embodiment of this application. FIG. 8 is still another schematic partial top view of the battery 10 corresponding to FIG. 7. As shown in FIG. 7 and FIG. 8, the second fastener 14 may extend along the second direction Y and cover at least part of the fire-extinguishing pipeline 12, such that the second fastener 14 may correspond to all of the first fasteners 13 distributed along the second direction Y, so as to improve the processing and assembly efficiency of the second fastener 14 as much as possible.

In some embodiments, the first fastener 13 includes at least one pair of first limiting portions 131, where each pair of first limiting portions 131 are spaced apart from each other along a first direction X, and the first direction X is perpendicular to an extension direction of the fire-extinguishing pipeline 12. The second fastener 14 includes at least one pair of second limiting portions 141, where each pair of second limiting portions 141 are spaced apart from each other along the first direction X, the fire-extinguishing pipeline 12 is provided between each pair of first limiting portions 131, and the fire-extinguishing pipeline 12 is provided between each pair of second limiting portions 141. In this way, the movement of the fire-extinguishing pipeline 12 along the first direction X can be restricted and restrained to prevent the fire-extinguishing pipeline 12 deviating from the pressure relief mechanism 211 along the first direction X during the use of the battery 10, thus ensuring the relative positions of the pressure relief mechanism 211 and the fire-extinguishing pipeline 12, and ensuring that the fire-extinguishing pipeline 12 can be accurately and timely broken during the actuation of the pressure relief mechanism 211, so as to achieve the effect of cooling.

Specifically, as shown in FIG. 3 to FIG. 8, for each first fastener 13, one or more pairs of first limiting portions 131 arranged along the Y direction can be provided, for example, each first fastener being provided with two pairs of first limiting portions 131 is used as an example for illustration in this application. However, the embodiments of this application are not limited thereto.

As shown in FIG. 3 to FIG. 8, for each second fastener 14, one or more pairs of second limiting portions 141 may be provided depending on the number of first fasteners 131 corresponding thereto. For example, as shown in FIG. 3 to FIG. 6, each second fastener 14 may have multiple pairs of second limiting portions 141, and the number of pairs of the second limiting portions 141 is equal to the number of pairs of first limiting portions 131 of all the first fasteners 13 corresponding thereto. For example, each second fastener 14 corresponds to three first fasteners 13 in FIG. 5, and the three first fasteners have six pairs of first limiting portions 131 in total, so each second fastener is correspondingly provided with six pairs of second limiting portions 141. For example, as shown in FIG. 7 and FIG. 8, the second fastener 14 can also be provided with one pair of second limiting portions 141 extending along the second direction Y, such that the one pair of second limiting portions 141 can correspond to the multiple pairs of first limiting portions 131 of the multiple second fasteners. However, the embodiments of this application are not limited thereto.

The first limiting portion 131 and the second limiting portion 141 of this embodiment of this application are described in detail below with reference to the accompanying drawings. For example, the first limiting portion 131 is a slot structure, and the second limiting portion 141 is clamped in the slot structure.

Specifically, the first limiting portion 131 is a first slot structure 132, where the first slot structure 132 includes a first slot wall 1321 and a second slot wall 1322 that are provided on a surface of the first fastener 13 away from the battery cell 20, where the first slot wall 1321 and the second slot wall 1322 are arranged along a first direction X, and the first direction X is perpendicular to an extension direction of the fire-extinguishing pipeline 12; and the second limiting portion 141 is clamped between the first slot wall 1321 and the second slot wall 1322. In this way, the fastening of the first fastener 13 and the second fastener 14 can be achieved by providing the first slot structure 132 and the second limiting portion 141 clamped in the first slot structure 132, facilitating processing and assembly.

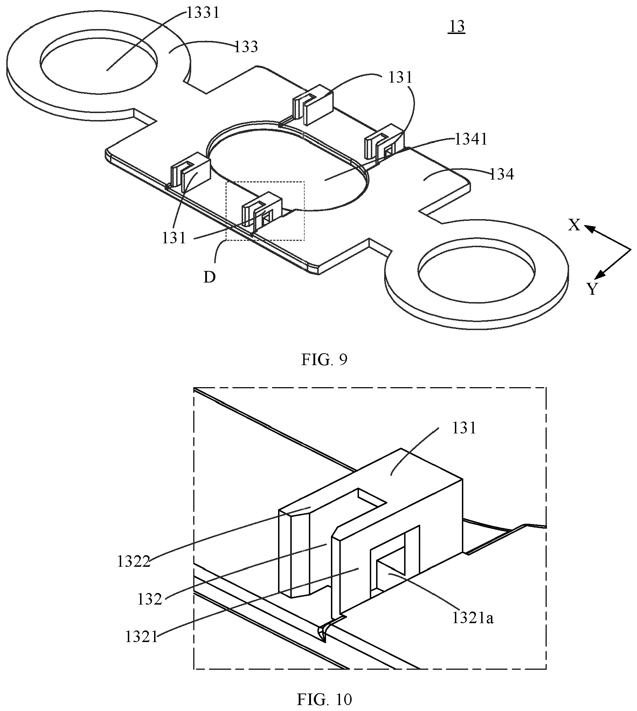

FIG. 9 is a schematic structural diagram of a first fastener 13 according to an embodiment of this application. The first fastener 13 in FIG. 9 may be, for example, any one of the first fasteners 13 shown in FIG. 3 to FIG. 6. As shown in FIG. 9, the first fastener 13 may include multiple first limiting portions 131. For example, the first fastener 13 may include two pairs of first limiting portions 131 arranged along a second direction Y, where each pair of limiting portions 131 include two first limiting portions 131 arranged along a first direction X.

As shown in FIG. 9, the first fastener 13 may further include a first body portion 134, where the multiple first limiting portions 131 may be connected through the first body portion 134. In addition, the first fastener 13 of this embodiment of this application is fastened to the surface of the first wall 21 and is located between the first wall 21 and the fire-extinguishing pipeline 12. In order to ensure that the fire-extinguishing pipeline 12 can be broken smoothly and timely during actuation of the pressure relief mechanism 211, the first fastener 13 should avoid the region corresponding to the pressure relief mechanism 211. For example, as shown in FIG. 9, the first body portion 134 of the first fastener 13 can be provided with an avoidance region 1341 to avoid the region corresponding to the pressure relief mechanism 211. Specifically, the avoidance region 1341 may be an opening such that during actuation of the pressure relief mechanism 211, the emissions from the pressure relief mechanism 211 pass through the opening to break the fire-extinguishing pipeline 12; or the avoidance region 1341 may be a weak region such that during actuation of the pressure relief mechanism 211, the emissions from the pressure relief mechanism 211 can first break the weak region, and then pass through the broken weak region to reach the fire-extinguishing pipeline 12 to break the fire-extinguishing pipeline 12. The embodiments of this application are not limited thereto.

The shape and the size of the avoidance region 1341 of this embodiment of this application can be configured depending on actual application, for example, depending on the shape or size of the pressure relief mechanism 211. For example, the shape of the avoidance region 1341 can be the same as the shape of the pressure relief mechanism 211, and the area of the avoidance region 1341 is larger than the area of the pressure relief mechanism 211. As shown in FIG. 9, for example, the pressure relief mechanism 211 in this application is in a kidney shape, and correspondingly, the avoidance region 1341 may also be in a kidney shape, or may be in an oval shape with an area larger than the pressure relief mechanism 211. The embodiments of this application are not limited thereto.

As shown in FIG. 9, the multiple first limiting portions 131 are arranged around the avoidance region 1341 to tightly fasten the fire-extinguishing pipeline 12. In addition, the structures of the multiple first limiting portions 131 may be the same or different. A detailed description is given below by using any one of the first limiting portions 131 as an example. FIG. 10 is an enlarged view of region D shown in FIG. 9, and a first limiting portion 131 shown in FIG. 10 is used as an example for description below.

As shown in FIG. 9 and FIG. 10, the first limiting portion 131 may be a first slot structure 132, where the first slot structure 132 includes a first slot wall 1321 and a second slot wall 1322, and the first slot wall 1321 and the second slot wall 1322 are arranged along a first direction X and arranged opposite each other. The first slot wall 1321 and the second slot wall 1322 may be parallel to each other such that the second limiting portion 141 is clamped between the first slot wall 1321 and the second slot wall 1322. The first slot wall 1321 and the second slot wall 1322 may be connected to each other through the first body portion 134 or may intersect through another wall. For example, the first slot wall 1321 and the second slot wall 1322 may be connected by providing a wall perpendicular to the first body portion 134. The embodiments of this application are not limited thereto.

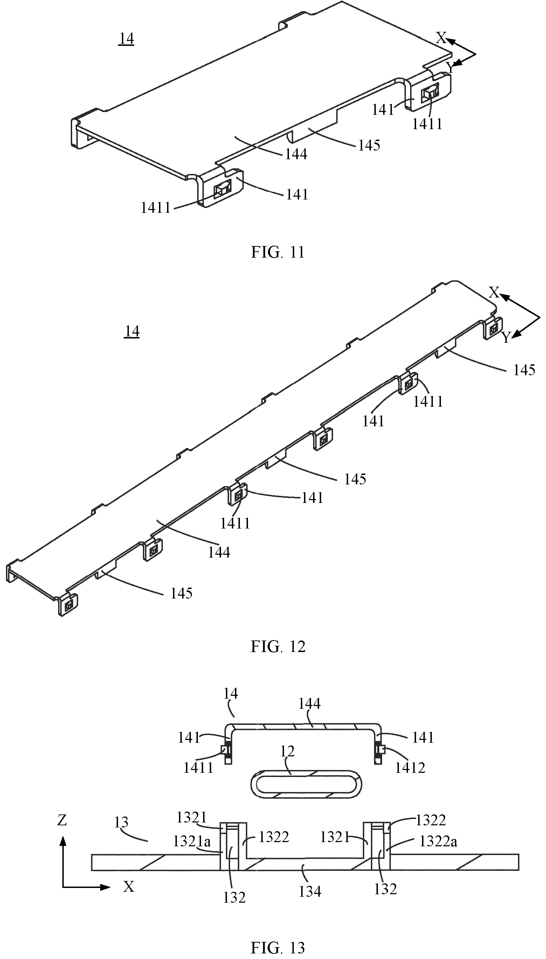

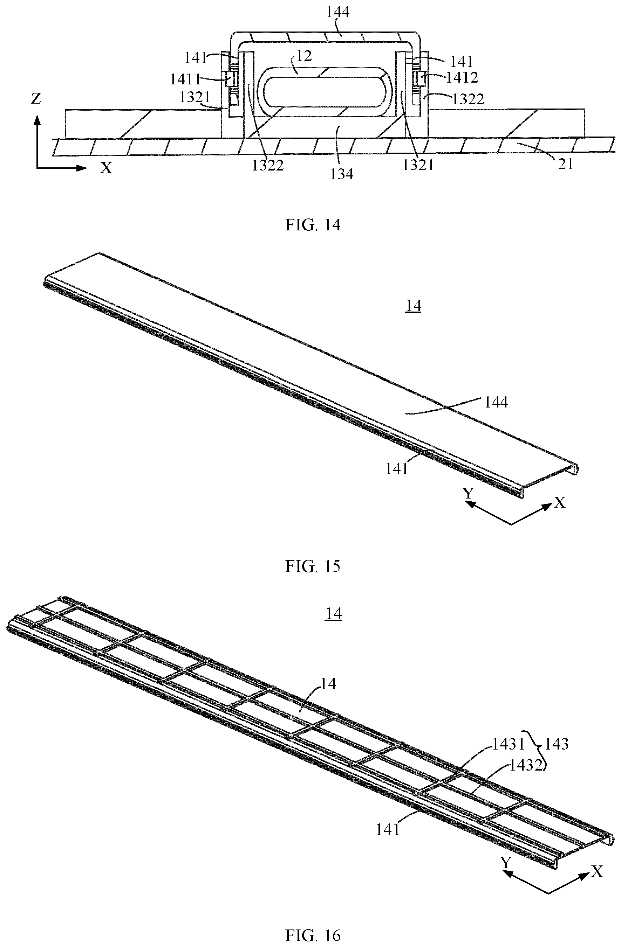

FIG. 11 is a schematic structural diagram of a second fastener 14 according to an embodiment of this application. For example, the second fastener 14 shown in FIG. 11 may be any one of second fasteners 14 included in the battery 10 as shown in FIG. 3 and FIG. 4. FIG. 12 is a schematic structural diagram of another second fastener 14 according to an embodiment of this application. For example, the second fastener 14 shown in FIG. 12 may be any one of second fasteners 14 included in the battery 10 as shown in FIG. 5 and FIG. 6. The second fasteners 14 shown in FIG. 11 and FIG. 12 may both be used in cooperation with the first fasteners 13 shown in FIG. 9 and FIG. 10. FIG. 13 is a schematic partial cross-sectional view of exploded structures of a first fastener 13, fire-extinguishing pipeline 12, and second fastener 14 according to an embodiment of this application. For example, FIG. 13 may be a schematic partial cross-sectional diagram of exploded structures of devices in direction A-A' shown in FIG. 4, or FIG. 13 may be a schematic partial cross-sectional diagram of exploded structures of devices in direction B-B' shown in FIG. 6. FIG. 14 is a schematic partial cross-sectional view of the first fastener 13, fire-extinguishing pipeline 12, and second fastener 14 that are mounted on a first wall 21. For example, FIG. 14 may be a schematic partial cross-sectional diagram of devices in direction A-A' shown in FIG. 4, or FIG. 14 may be a schematic partial cross-sectional diagram of devices in direction B-B' shown in FIG. 6. In other words, FIG. 14 is a schematic diagram of the devices shown in FIG. 13 that are assembled and mounted on the first wall 21.

In this embodiment of this application, a first limiting structure 1321a is provided on the first slot wall 1321, a first protrusion 1411 is provided on a surface of the second limiting portion 141 facing towards the first slot wall 1321, and the first limiting structure 1321a cooperates with the first protrusion 1411 such that the second limiting portion 141 is fitted to the first limiting portion 131; and/or a second limiting structure 1322a is provided on the second slot wall 1322, a second protrusion 1412 is provided on a surface of the second limiting portion 141 facing towards the second slot wall 1322, and the second limiting structure 1322a cooperates with the second protrusion 1412 such that the second limiting portion 141 is fitted to the first limiting portion 131.

Specifically, the embodiments shown in FIG. 9 to FIG. 14 are used as an example. For any two first limiting portions 131 correspondingly arranged along direction X, the two first limiting portions 131 are both first slot structures 132. For one of the first slot structures 132, a first limiting structure 1321a is provided on the first slot wall 1321 thereof, and no second limiting structure 1322a is provided on the second slot wall 1321 thereof; and correspondingly, a first protrusion 1411 is provided on a surface of the second limiting portion 141 facing towards the first slot wall 1321, and no second protrusion 1412 is provided on a surface of the second limiting portion 141 facing towards the second slot wall 1322. The first protrusion 1411 cooperates with the first limiting structure 1321a such that the first limiting portion 131 is fitted to the second limiting portion 141, and thus the fire-extinguishing pipeline 12 is fastened between the first fastener 13 and the second fastener 14.

In contrast, for the other of the first slot structures 132, no first limiting structure 1321a is provided on the first slot wall 1321 thereof, and a second limiting structure 1322a is provided on the second slot wall 1321 thereof; and correspondingly, no first protrusion 1411 is provided on a surface of the second limiting portion 141 facing towards the first slot wall 1321, and a second protrusion 1412 is provided on a surface of the second limiting portion 141 facing towards the second slot wall 1322. The second protrusion 1412 cooperates with the second limiting structure 1322a such that the first limiting portion 131 is fitted to the second limiting portion 141, and thus the fire-extinguishing pipeline 12 is fastened between the first fastener 13 and the second fastener 14.

In the embodiments shown in FIG. 9 to FIG. 14, although only one rather than two of the slot walls of each first slot structure 132 is provided with the limiting structure, the first limiting portion 131 can still be fitted to the second limiting portion 141 through cooperation between the first protrusion 1411 and the first limiting structure 1321a or through cooperation between the second protrusion 1412 and the second limiting structure 1322a, such that the fire-extinguishing pipeline 12 is fastened between the first fastener 13 and the second fastener 14. Such simple structure facilitates processing and assembly. However, the embodiments of this application are not limited thereto.

It should be understood that for any one of the foregoing embodiments, the specific implementations of the first limiting structure 1321a and the second limiting structure 1322a can be configured flexibly depending on actual application, and the implementations of the first limiting structure 1321a and the second limiting structure 1322a may be the same or different.

For example, the first limiting structure 1321a is a first through hole provided in the first slot wall 1321; and/or the second limiting structure 1322a is a second through hole provided in the second slot wall 1322. Specifically, as shown in FIG. 9 to FIG. 14, the first limiting structure on the first slot wall 1321 is a first through hole such that the first protrusion 1411 can be at least partially accommodated in the first through hole, thereby achieving mutual cooperation and fastening between the first protrusion 1411 and the first limiting structure 1321a. Similarly, the second limiting structure 1322a on the second slot wall 1322 may be a second through hole such that the second protrusion 1412 may be at least partially accommodated in the second through hole, thereby achieving mutual cooperation and fastening between the second protrusion 1412 and the second limiting structure 1322a.

For another example, the first limiting structure 1321a may alternatively be a protrusion provided on the first slot wall 1321, and the second limiting structure 1322a may alternatively be a protrusion provided on the second slot wall 1322. The embodiments of this application are not limited thereto. Examples are given below with reference to the accompanying drawings.

It should be understood that the first limiting structure 1321a provided on the first slot wall 1321 and/or the second limiting structure 1322a provided on the second slot wall 1322 may alternatively be a combination of various structures. For example, a first through hole and a protrusion can both be provided on the first slot wall 1321 and together serve as the first limiting structure 1321a so as to enhance the stability of cooperation between the first limiting structure 1321a and the first protrusion 1411. Similarly, a second through hole and a protrusion can both be provided on the second slot wall 1321 and together serve as the second limiting structure 1322a so as to enhance the stability of cooperation between the second limiting structure 1322a and the second protrusion 1412. The embodiments of this application are not limited thereto.

In this embodiment of this application, the second fastener 14 includes multiple pairs of the second limiting portions 141 arranged along the second direction Y, where the second direction is perpendicular to the first direction, a guide portion 145 is provided between two adjacent pairs of the second limiting portions 141, and the guide portion 145 is configured to guide installation of the second fastener 14. As shown in FIG. 9 to FIG. 14, the second fastener 14 of this embodiment of this application can be provided with multiple pairs of second limiting portions 141 arranged along the second direction Y. To speed up the installation, the guide portion 145 can be provided to identify the installation direction of the second fastener 14. For example, the guide portion 145 can extend along the second direction Y such that the second fastener 14 can be quickly aligned with the first fastener 13 during installation, thereby improving the installation efficiency.

The foregoing description mainly uses the second fastener 14 including multiple pairs of the second limiting portions 141 as an example. For example, the number of the multiple second limiting portions 141 included in the second fastener 14 is equal to the number of all of the first limiting portions 131 included in the corresponding at least one first fastener 13. Differently, the second fastener 14 may alternatively be provided with one pair of second limiting portions 141. For example, under the condition that a second fastener 14 corresponding to all of the first fasteners 13 arranged along the second direction Y shown in FIG. 7 and FIG. 8, the second fastener 14 may be the second fastener 14 shown in FIG. 12, or may be the second fastener 14 in other forms to simplify processing.

For example, the second fastener 14 includes a pair of the second limiting portions 141, where each second limiting portion 141 extends along the second direction Y, and the second direction Y is perpendicular to the first direction X. FIG. 15 is a schematic structural diagram of still another second fastener 14 according to an embodiment of this application. For example, the second fastener 14 shown in FIG. 15 may be any one of the second fasteners 14 included in the batteries 10 shown in FIG. 3 to FIG. 8. As shown in FIG. 15, the second fastener 14 corresponds to one or more first fasteners 13, a pair of second limiting portions 141 of the second fastener 14 corresponds to multiple first limiting portions 131, and the second limiting portions are provided as an integrated structure extending along the second direction Y, improving processing efficiency and facilitating mass production.

It should be understood that when the second fastener 14 shown in FIG. 15 is used, the second fastener 14 extends along the second direction Y. To enhance the stability of this second fastener 14, a stiffener 143 may be provided on the second fastener 14. Specifically, FIG. 16 is a schematic structural diagram of still another second fastener 14 according to an embodiment of this application. For example, the second fastener 14 shown in FIG. 16 may be any one of the second fasteners 14 included in the batteries 10 shown in FIG. 3 to FIG. 8.

As shown in FIG. 16, a stiffener 143 is provided on a surface of the second fastener 14 far away from the battery cell 20. Specifically, the stiffener 143 may include a first stiffener 1431 extending along the first direction X; and/or the stiffener 143 may include a second stiffener 1432 extending in the second direction Y. The stiffener 143 can enhance the strength of the second fastener 14 such that the second fastener 14 is less likely to be broken and damaged.

For the second fasteners 14 shown in FIG. 15 and FIG. 16, if the corresponding first fastener 13 uses the form shown in FIG. 9, to be specific, the first limiting structure 1321a is a first through hole and the second limiting structure 1322a is a second through hole, it is difficult for the second limiting portion 141 to be clamped in the first slot structure 132 through the first limiting structure 1321a and/or the second limiting structure 1322a. Therefore, the clamping between the first limiting portion 131 and the second limiting portion 141 can be achieved by configuring the first limiting structure 1321a and/or the second limiting structure 1322a as a protrusion.

Specifically, the first limiting structure 1321a is a third protrusion provided on the first slot wall 1321, where the third protrusion is provided at an end of the first slot wall 1321 away from the battery cell 20 and protrudes towards the second limiting portion 141; and/or the second limiting structure 1322a is a fourth protrusion provided on the second slot wall 1322, where the fourth protrusion is provided at an end of the second slot wall 1322 away from the battery cell 20 and protrudes towards the second limiting portion 141.

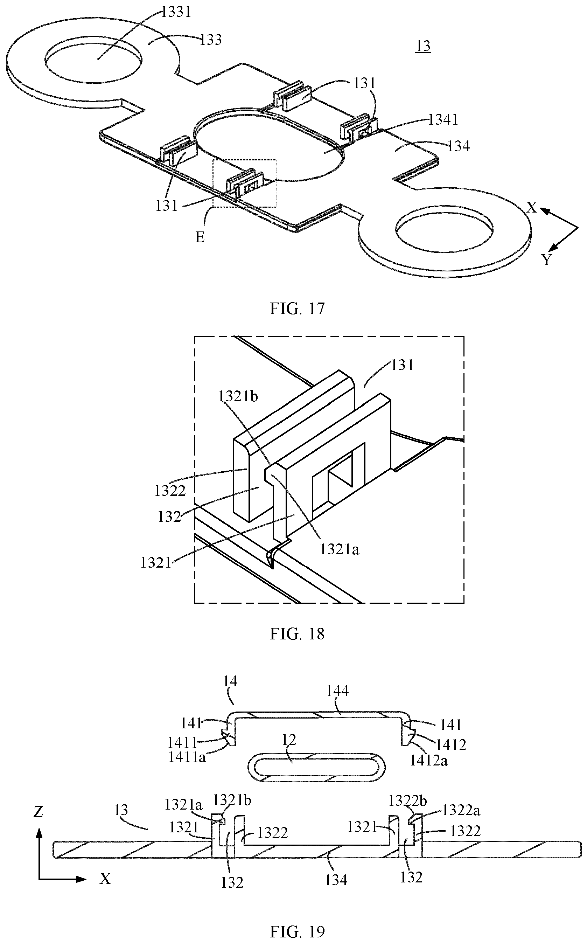

FIG. 17 is a schematic structural diagram of another first fastener 13 according to an embodiment of this application. The first fastener 13 in FIG. 17 may be, for example, any one of the first fasteners 13 shown in FIG. 7 and FIG. 8, and the first fastener 13 shown in FIG. 17 may be used in cooperation with the second fastener 14 shown in FIG. 15 or FIG. 16. As shown in FIG. 17, the first fastener 13 may include multiple first limiting portions 131. For example, the first fastener 13 may include two pairs of first limiting portions 131 arranged along a second direction Y, where each pair of limiting portions 131 include two first limiting portions 131 arranged along a first direction X.

It should be understood that the first fastener 13 shown in FIG. 17 differs from the first fastener 13 shown in FIG. 9 in that all the first limiting portions 131 are different and the other portions are consistent with those shown in FIG. 9. For example, the body portion 134, the avoidance region 1341, and the accommodating portion 133 shown in FIG. 17 are consistent with those shown in FIG. 9 and are applicable to the description in FIG. 9. For brevity, details are not repeated herein.

As shown in FIG. 17, the structures of the multiple first limiting portions 131 included in the second fastener 14 may be the same or different. A detailed description is given below by using any one of the first limiting portions 131 as an example. FIG. 18 is an enlarged view of region E shown in FIG. 17, and a first limiting portion 131 shown in FIG. 18 is used as an example for description below.

As shown in FIG. 18, the first limiting portion 131 is a first slot structure 132, where the first slot structure 132 includes a first slot wall 1321 and a second slot wall 1322, and the first slot wall 1321 and the second slot wall 1322 are arranged along a first direction X and arranged opposite each other. The first slot wall 1321 and the second slot wall 1322 may be parallel to each other such that the second limiting portion 141 is clamped between the first slot wall 1321 and the second slot wall 1322. The first slot wall 1321 and the second slot wall 1322 may be connected to each other through the first body portion 134 or may intersect through another wall. For example, the first slot wall 1321 and the second slot wall 1322 may be connected by providing a wall perpendicular to the first body portion 134. The embodiments of this application are not limited thereto.

Further, as shown in FIG. 18, the first limiting structure 1321a is a third protrusion provided at an end of the first slot wall 1321 away from the battery cell 20 and protruding towards the second limiting portion 141, and the second limiting structure 1322a is a fourth protrusion provided at an end of the second slot wall 1322 away from the battery cell 20 and protruding towards the second limiting portion 141.

It should be understood that a variety of structures may also be provided on the first slot wall 1321 and/or the second slot wall 1322 and together form the first limiting structure 1321a and/or the second limiting structure 1322a. For example, as shown in FIG. 18, a third protrusion and a through hole can be provided on the first slot wall 1321 and together form the first limiting structure 1321a so as to enhance the stability of cooperation between the first limiting structure 1321a and the first protrusion 1411. Similarly, a fourth protrusion and a through hole can be provided on the second slot wall 1321 and together serve as the second limiting structure 1322a so as to enhance the stability of cooperation between the second limiting structure 1322a and the second protrusion 1412. The embodiments of this application are not limited thereto.

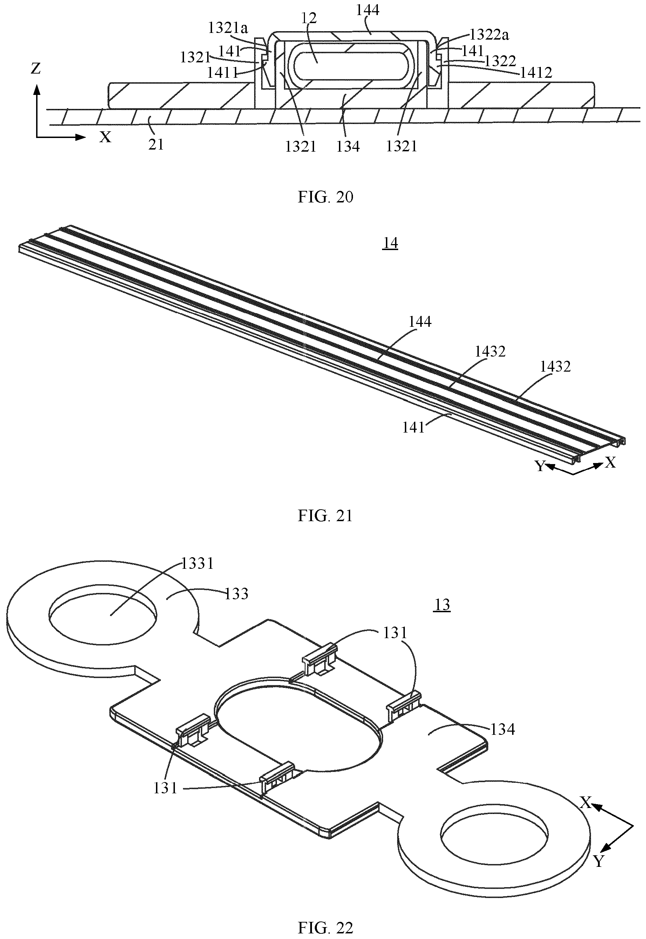

FIG. 19 is a schematic partial cross-sectional view of exploded structures of another first fastener 13, fire-extinguishing pipeline 12, and second fastener 14 according to an embodiment of this application. For example, FIG. 19 may be a schematic partial cross-sectional diagram of an exploded structure of devices in direction C-C' shown in FIG. 8. FIG. 20 is a schematic partial cross-sectional view of the first fastener 13, fire-extinguishing pipeline 12, and second fastener 14 that are mounted on a first wall 21. For example, FIG. 20 may be a schematic partial cross-sectional diagram of devices in direction C-C' shown in FIG. 8. In other words, FIG. 20 is a schematic diagram of the devices shown in FIG. 19 that are assembled and mounted on the first wall 21.

As shown in FIG. 19 and FIG. 20, if the first limiting structure 1321a is a third protrusion 1321a provided at an end of the first slot wall 1321 away from the battery cell 20 and protruding towards the second limiting portion 141, the third protrusion 1321a may be provided on a side of the first protrusion 1411 far away from the battery cell 20 such that the third protrusion 1321a and the first protrusion 1411 are mutually constrained to cause the first limiting portion 131 to fit to the second limiting portion 141. Similarly, if the second limiting structure 1322a is a fourth protrusion 1322a provided at an end of the second slot wall 1322 away from the battery cell 20 and protruding towards the second limiting portion 141, the fourth protrusion 1322a may be provided on a side of the second protrusion 1412 far away from the battery cell 20 such that the fourth protrusion 1322a and the second protrusion 1412 are mutually constrained to cause the first limiting portion 131 to fit to the second limiting portion 141.

In addition, for the third protrusion 1321a and the first protrusion 1411, as well as the fourth protrusion 1322a and the second protrusion 1412, during installation, in order to achieve quick fitting, a bevel may be provided on each protrusion to facilitate assembly. Specifically, a first inclined surface 1411a is provided at an end of the first protrusion 1411 close to the battery cell 20, a third inclined surface 1321b is provided at an end of the third protrusion 1321a far away from the battery cell 20, and the first inclined surface 1411a and the third inclined surface 1321b correspond to each other and are respectively inclined with respect to a plane in which the first wall 21 is located; and/or a second inclined surface 1412a is provided at an end of the second protrusion 1412 close to the battery cell 20, a fourth inclined surface 1322b is provided at an end of the fourth protrusion 1322a far away from the battery cell 20, and the second inclined surface 1412a and the fourth inclined surface 1322b correspond to each other and are respectively inclined with respect to a plane in which the first wall 21 is located. In this way, the first inclined surface 1411a and the third inclined surface 1321b cooperate with each other such that the first protrusion 1411 can be smoothly inserted into the first slot structure 132 and be fitted to the third protrusion 1321a; and the second inclined surface 1412a and the fourth inclined surface 1322b cooperate with each other such that the second protrusion 1412 can be smoothly inserted into the first slot structure 132 and be fitted to the fourth protrusion 1322a.

It should be understood that the first limiting portion 131 being the first slot structure 132 and the second limiting portion 141 being clamped in the first slot structure 132 is used as an example for the foregoing description; in contrast, the second limiting portion 141 may also be a slot structure to enable the first limiting portion 131 to be clamped in the slot structure.

Specifically, the second limiting portion 141 is a second slot structure 142, where the second slot structure 142 includes a third slot wall 1421 and a fourth slot wall 1422 that are provided on a surface of the second fastener 14 facing towards the battery cell 20, where the third slot wall 1421 and the fourth slot wall 1422 are arranged along a first direction X, and the first direction X is perpendicular to an extension direction of the fire-extinguishing pipeline 12; and the first limiting portion 131 is clamped between the third slot wall 1421 and the fourth slot wall 1422.

It should be understood that the second slot structure 142 is similar to the first slot structure 132 in the foregoing embodiment, and is therefore applicable to the related description of the first slot structure 132 therein. Accordingly, the third slot wall 1421 is similar to the first slot wall 1321 in the foregoing embodiment, and is therefore applicable to the related description of the first slot wall 1321. The fourth slot wall 1422 is similar to the second slot wall 1322 in the foregoing embodiment, and is therefore applicable to the related description of the second slot wall 1322. For brevity, details are not described herein again.

In this embodiment of this application, a third limiting structure 1421a is provided on the third slot wall 1421, a fifth protrusion 1311 is provided on a surface of the first limiting portion 131 facing towards the third slot wall 1421, and the third limiting structure 1421a cooperates with the fifth protrusion 1311 such that the second limiting portion 141 is fitted to the first limiting portion 131; and/or a fourth limiting structure 1422a is provided on the fourth slot wall 1422, a sixth protrusion 1312 is provided on a surface of the first limiting portion 131 facing towards the fourth slot wall 1422, and the fourth limiting structure 1422a cooperates with the sixth protrusion 1312 such that the second limiting portion 141 is fitted to the first limiting portion 131.

In some embodiments, the third limiting structure 1421a is a third through hole provided in the third slot wall 1421; and/or the fourth limiting structure 1422a is a fourth through hole provided in the fourth slot wall 1422.

In some embodiments, the third limiting structure 1421a is a seventh protrusion provided on the third slot wall 1421, where the seventh protrusion is provided at an end of the third slot wall 1421 facing towards the battery cell 20 and protrudes towards the first limiting portion 131; and/or the fourth limiting structure 1422a is an eighth protrusion provided on the fourth slot wall 1422, where the eighth protrusion is provided at an end of the fourth slot wall 1422 facing towards the battery cell 20 and protrudes towards the first limiting portion 131.

In some embodiments, a fifth inclined surface 1311a is provided at an end of the fifth protrusion 1311 far away from the battery cell 20, a seventh inclined surface 1421b is provided at an end of the seventh protrusion close to the battery cell 20, and the fifth inclined surface 1311a and the seventh inclined surface 1421b correspond to each other and are respectively inclined with respect to a plane in which the first wall 21 is located; and/or a sixth inclined surface 1312a is provided at an end of the sixth protrusion 1312 far away from the battery cell 20, an eighth inclined surface 1422b is provided at an end of the eighth protrusion close to the battery cell 20, and the sixth inclined surface 1312a and the eighth inclined surface 1422b correspond to each other and are respectively inclined with respect to a plane in which the first wall 21 is located.

It should be understood that the third limiting structure 1421a provided on the third slot wall 1421 is similar to the first limiting structure 1321a provided on the first slot wall 1321 in the preceding embodiment, and is therefore applicable to the related description of the first limiting structure 1321a. The fourth limiting structure 1422a provided on the fourth slot wall 1422 is similar to the second limiting structure 1322a provided on the second slot wall 1322 in the preceding embodiment, and is therefore applicable to the related description of the first limiting structure 1321a. The fifth protrusion 1311 provided on the first limiting portion 131 is similar to the first protrusion 1411 provided on the second limiting portion 141 in the preceding embodiment, and is therefore applicable to the related description of the first protrusion 1411. The sixth protrusion 1312 provided on the first limiting portion 131 is similar to the second protrusion 1412 provided on the second limiting portion 141 in the previous embodiment, and is therefore applicable to the related description of the second protrusion 1412. For brevity, details are not described herein again.

An embodiment in which the second limiting portion 141 is a second slot structure 142 to enable the first limiting portion 131 to be clamped to the second slot structure 142 is illustrated below with reference to the accompanying drawings.

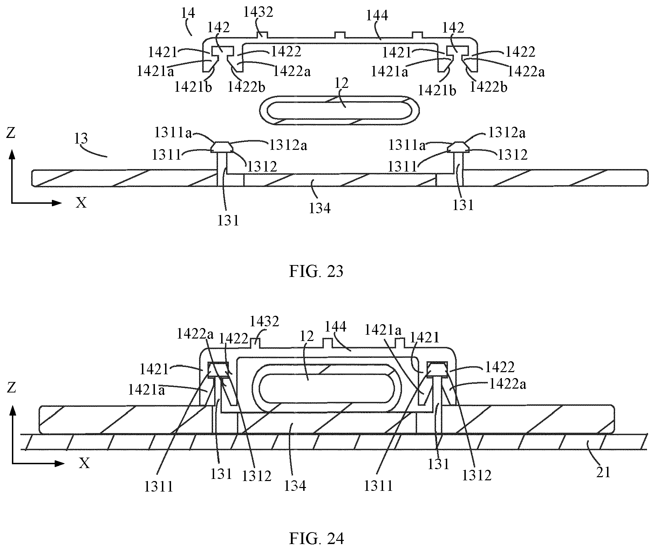

FIG. 21 is a schematic structural diagram of still another second fastener 14 according to an embodiment of this application. FIG. 22 is a schematic structural diagram of still another first fastener 13 according to an embodiment of this application. The second fastener 14 shown in FIG. 21 can be used in cooperation with the first fastener 13 shown in FIG. 22. FIG. 23 is a schematic partial cross-sectional view of exploded structures of still another first fastener 13, fire-extinguishing pipeline 12, and second fastener 14 according to an embodiment of this application. For example, the first fastener 13 and the second fastener 14 in FIG. 23 can be the first fastener 13 shown in FIG. 22 and the second fastener 14 shown in FIG. 21, respectively. FIG. 24 is a schematic partial cross-sectional view of still another first fastener 13, fire-extinguishing pipeline 12, and second fastener 14 that are mounted on a first wall 21 according to an embodiment of this application. For example, FIG. 24 may be a schematic diagram of devices in FIG. 23 that are assembled and installed on the first wall 21.

As shown in FIG. 21 to FIG. 24, the second limiting portion 141 is a second slot structure 142, where the second slot structure 142 includes a third slot wall 1421 and a fourth slot wall 1422 that are provided on a surface of the second fastener 14 facing towards the battery cell 20, where the third slot wall 1421 and the fourth slot wall 1422 are arranged along a first direction X, and the first direction X is perpendicular to an extension direction of the fire-extinguishing pipeline 12; and the first limiting portion 131 is clamped between the third slot wall 1421 and the fourth slot wall 1422.

In addition, a third limiting structure 1421a is provided on the third slot wall 1421, a fifth protrusion 1311 is provided on a surface of the first limiting portion 131 facing towards the third slot wall 1421, and the third limiting structure 1421a cooperates with the fifth protrusion 1311 such that the second limiting portion 141 is fitted to the first limiting portion 131. Specifically, the third limiting structure 1421a being a seventh protrusion 1421a provided on the third slot wall 1421 is used as an example herein. The seventh protrusion 1421a is provided at an end of the third slot wall 1421 facing towards the battery cell 20 and protrudes towards the first limiting portion 131.

Similarly, a fourth limiting structure 1422a is provided on the fourth slot wall 1422, a sixth protrusion 1312 is provided on a surface of the first limiting portion 131 facing towards the fourth slot wall 1422, and the fourth limiting structure 1422a cooperates with the sixth protrusion 1312 such that the second limiting portion 141 is fitted to the first limiting portion 131. Specifically, the fourth limiting structure 1422a being an eighth protrusion 1422a provided on the fourth slot wall 1422 is used as an example herein. The eighth protrusion 1422a is provided at an end of the fourth slot wall 1422 facing towards the battery cell 20 and protrudes towards the first limiting portion 131.

It should be understood that for the fifth protrusion 1311 and the seventh protrusion 1421a, as well as the sixth protrusion 1312 and the eighth protrusion 1422a, during installation, in order to achieve quick fitting, to be specific, to enable the first limiting structure 131 to be quickly inserted into the second slot structure 142, a bevel may be provided on each protrusion to facilitate assembly. Specifically, a fifth inclined surface 1311a is provided at an end of the fifth protrusion 1311 far away from the battery cell 20, a seventh inclined surface 1421b is provided at an end of the seventh protrusion 1421a close to the battery cell 20, and the fifth inclined surface 1311a and the seventh inclined surface 1421b correspond to each other and are respectively inclined with respect to a plane in which the first wall 21 is located. Similarly, a sixth inclined surface 1312a is provided at an end of the sixth protrusion 1312 far away from the battery cell 20, an eighth inclined surface 1422b is provided at an end of the eighth protrusion 1422a close to the battery cell 20, and the sixth inclined surface 1312a and the eighth inclined surface 1422b correspond to each other and are respectively inclined with respect to a plane in which the first wall 21 is located. In this way, during installation, through the mutual cooperation of the fifth inclined surface 1311a and the seventh inclined surface 1421b, as well as the mutual cooperation of the sixth inclined surface 1312a and the eighth inclined surface 1422b, the first limiting portion 131 can be quickly inserted into the second slot structure 142, and through the mutual fitting of the fifth protrusion 1311 and the seventh protrusion 1421a, as well as the mutual fitting of the sixth protrusion 1312 and the eighth protrusion 1422a, fastening of the first fastener 13 and the second fastener 14 is achieved, that is, the fire-extinguishing pipeline 12 is fastened.

The foregoing describes the battery 10 and the electric device in the embodiments of this application; and the following describes a method and device for manufacturing battery 10 in the embodiments of this application. For those not described in detail, refer to the foregoing embodiments.

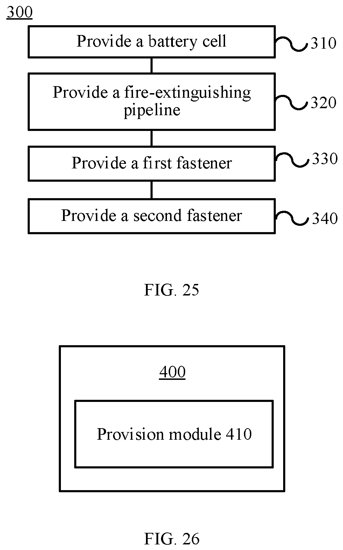

FIG. 25 is a schematic flowchart of a method 300 for manufacturing battery 10 according to an embodiment of this application. As shown in FIG. 25, the method 300 may include: S310: providing a battery cell 20, where a pressure relief mechanism 211 is provided on a first wall 21 of the battery cell 20, and the pressure relief mechanism 211 is configured to actuate release of an internal pressure of the battery cell 20 when the internal pressure or an internal temperature of the battery cell 20 reaches a threshold; S320: providing a fire-extinguishing pipeline 12, where the fire-extinguishing pipeline is configured to accommodate a fire-extinguishing medium, and the fire-extinguishing pipeline 12 is configured to discharge the fire-extinguishing medium during actuation of the pressure relief mechanism 211; S330: providing a first fastener 13, where the first fastener 13 is fastened to a surface of the first wall 21 of the battery cell 20 away from the interior of the battery cell 20, and the first fastener 13 is provided with a first limiting portion 131; and S340: providing a second fastener 14, where the second fastener 14 is provided on a side of the first fastener 13 away from the battery cell 20, the second fastener 14 is provided with a second limiting portion 141, and the second limiting portion 141 cooperates with the first limiting portion 131 to fasten the fire-extinguishing pipeline 12 between the first fastener 13 and the second fastener 14.

FIG. 26 is a schematic block diagram of a device 400 for manufacturing battery 10 according to a non-claimed embodiment of this application. As shown in FIG. 26, the device 400 may include: a provision module 410. The provision module 410 is configured to provide a battery cell 20, where a pressure relief mechanism 211 is provided on a first wall 21 of the battery cell 20, and the pressure relief mechanism 211 is configured to actuate release of an internal pressure of the battery cell 20 when the internal pressure or an internal temperature of the battery cell 20 reaches a threshold; provide a fire-extinguishing pipeline 12, where the fire-extinguishing pipeline is configured to accommodate a fire-extinguishing medium, and the fire-extinguishing pipeline 12 is configured to discharge the fire-extinguishing medium during actuation of the pressure relief mechanism 211; provide a first fastener 13, where the first fastener 13 is fastened to a surface of the first wall 21 of the battery cell 20 away from the interior of the battery cell 20, and the first fastener 13 is provided with a first limiting portion 131; and provide a second fastener 14, where the second fastener 14 is provided on a side of the first fastener 13 away from the battery cell 20, the second fastener 14 is provided with a second limiting portion 141, and the second limiting portion 141 cooperates with the first limiting portion 131 to fasten the fire-extinguishing pipeline 12 between the first fastener 13 and the second fastener 14.

This application is not limited to the specific embodiments disclosed in this specification but includes all technical solutions falling within the scope of the claims.

## Claims

1. A battery (10), comprising:
a battery cell (20), wherein a pressure relief mechanism (211) is provided on a first wall (21) of the battery cell (20), and the pressure relief mechanism (211) is configured to actuate release of an internal pressure of the battery cell (20) when the internal pressure or an internal temperature of the battery cell (20) reaches a threshold;
a fire-extinguishing pipeline (12) configured to accommodate a fire-extinguishing medium, wherein the fire-extinguishing pipeline (12) is configured to discharge the fire-extinguishing medium during actuation of the pressure relief mechanism (211);
a first fastener (13), wherein the first fastener (13) is fastened to a surface of the first wall (21) of the battery cell (20) away from the interior of the battery cell (20), and the first fastener (13) is provided with a first limiting portion (131), **characterized in that**
a second fastener (14) isprovided on a side of the first fastener (13) away from the battery cell (20), wherein the second fastener (14) is provided with a second limiting portion (141), and the second limiting portion (141) cooperates with the first limiting portion (131) to fasten the fire-extinguishing pipeline (12) between the first fastener (13) and the second fastener (14).

2. The battery (10) according to claim 1, **characterized in that** the first limiting portion (131) is a first slot structure (132), wherein the first slot structure (132) comprises a first slot wall (1321) and a second slot wall (1322) that are provided on a surface of the first fastener (13) away from the battery cell (20), the first slot wall (1321) and the second slot wall (1322) being arranged along a first direction (X), and the first direction (X) being perpendicular to an extension direction of the fire-extinguishing pipeline (12); and the second limiting portion (141) is clamped between the first slot wall (1321) and the second slot wall (1322).

3. The battery (10) according to claim 2, **characterized in that** a first limiting structure (1321a) is provided on the first slot wall (1321), a first protrusion (1411) is provided on a surface of the second limiting portion (141) facing towards the first slot wall (1321), and the first limiting structure (1321a) cooperates with the first protrusion (1411) such that the second limiting portion (141) is fitted to the first limiting portion (131); and/or
a second limiting structure (1322a) is provided on the second slot wall (1322), a second protrusion (1412) is provided on a surface of the second limiting portion (141) facing towards the second slot wall (1322), and the second limiting structure (1322a) cooperates with the second protrusion (1412) such that the second limiting portion (141) is fitted to the first limiting portion (131).

4. The battery (10) according to claim 3, **characterized in that** the first limiting structure (1321a) is a first through hole provided in the first slot wall (1321); and/or
the second limiting structure (1322a) is a second through hole provided in the second slot wall (1322).

5. The battery (10) according to claim 3, **characterized in that** the first limiting structure (1321a) is a third protrusion (1321a) provided on the first slot wall (1321), wherein the third protrusion (1321a) is provided at an end of the first slot wall (1321) away from the battery cell (20) and protrudes towards the second limiting portion (141); and/or
the second limiting structure (1322a) is a fourth protrusion (1322a) provided on the second slot wall (1322), wherein the fourth protrusion (1322a) is provided at an end of the second slot wall (1322) away from the battery cell (20) and protrudes towards the second limiting portion (141).

6. The battery (10) according to claim 5, **characterized in that** a first inclined surface (1411a) is provided at an end of the first protrusion (1411) close to the battery cell (20), a third inclined surface (1321b) is provided at an end of the third protrusion (1321a) far away from the battery cell (20), and the first inclined surface (1411a) and the third inclined surface (1321b) correspond to each other and are respectively inclined with respect to a plane in which the first wall (21) is located; and/or
a second inclined surface (1412a) is provided at an end of the second protrusion (1412) close to the battery cell (20), a fourth inclined surface (1322b) is provided at an end of the fourth protrusion (1322a) far away from the battery cell (20), and the second inclined surface (1412a) and the fourth inclined surface (1322b) correspond to each other and are respectively inclined with respect to a plane in which the first wall (21) is located.

7. The battery (10) according to claim 1, **characterized in that** the second limiting portion (141) is a second slot structure (142), wherein the second slot structure (142) comprises a third slot wall (1421) and a fourth slot wall (1422) that are provided on a surface of the second fastener (14) facing towards the battery cell (20), the third slot wall (1421) and the fourth slot wall (1422) being arranged along a first direction (X), and the first direction (X) being perpendicular to an extension direction of the fire-extinguishing pipeline (12); and the first limiting portion (131) is clamped between the third slot wall (1421) and the fourth slot wall (1422).

8. The battery (10) according to claim 7, **characterized in that** the third slot wall (1421) is provided with a third limiting structure (1421a), a fifth protrusion (1311) is provided on a surface of the first limiting portion (131) facing towards the third slot wall (1421), and the third limiting structure (1421a) cooperates with the fifth protrusion (1311) such that the second limiting portion (141) is fitted to the first limiting portion (131); and/or
the fourth slot wall (1422) is provided with a fourth limiting structure (1422a), a sixth protrusion (1312) is provided on a surface of the first limiting portion (131) facing towards the fourth slot wall (1422), and the fourth limiting structure (1422a) cooperates with the sixth protrusion (1312) such that the second limiting portion (141) is fitted to the first limiting portion (131).

9. The battery (10) according to claim 8, **characterized in that** the third limiting structure (1421a) is a third through hole provided in the third slot wall (1421); and/or
the fourth limiting structure (1422a) is a fourth through hole provided in the fourth slot wall (1422).

10. The battery (10) according to claim 8, **characterized in that** the third limiting structure (1421a) is a seventh protrusion (1421a) provided on the third slot wall (1421), wherein the seventh protrusion (1421a) is provided at an end of the third slot wall (1421) facing towards the battery cell (20) and protrudes towards the first limiting portion (131); and/or
the fourth limiting structure (1422a) is an eighth protrusion (1422a) provided on the fourth slot wall (1422), wherein the eighth protrusion (1422a) is provided at an end of the fourth slot wall (1422) facing towards the battery cell (20) and protrudes towards the first limiting portion (131).

11. The battery (10) according to claim 10, **characterized in that** a fifth inclined surface (1311a) is provided at an end of the fifth protrusion (1311) far away from the battery cell (20), a seventh inclined surface (1421b) is provided at an end of the seventh protrusion (1421a) close to the battery cell (20), and the fifth inclined surface (1311a) and the seventh inclined surface (1421b) correspond to each other and are respectively inclined with respect to a plane in which the first wall (21) is located; and/or
a sixth inclined surface (1312a) is provided at an end of the sixth protrusion (1312) far away from the battery cell (20), an eighth inclined surface (1422b) is provided at an end of the eighth protrusion (1422a) close to the battery cell (20), and the sixth inclined surface (1312a) and the eighth inclined surface (1422b) correspond to each other and are respectively inclined with respect to a plane in which the first wall (21) is located.

12. The battery (10) according to any one of claims 1 to 11, **characterized in that** the battery (10) comprises multiple battery cells (20) arranged along a second direction (Y), multiple first fasteners (13) arranged along the second direction (Y), and at least one second fastener (14), and the fire-extinguishing pipeline (12) extends along the second direction (Y).

13. The battery (10) according to claim 12, **characterized in that** the battery (10) comprises multiple second fasteners (14), wherein the multiple second fasteners (14) are in one-to-one correspondence with the multiple first fasteners (13);
or
**characterized in that** the second fastener (14) corresponds to the multiple first fasteners (13).

14. The battery (10) according to any one of claims 1 to 13, **characterized in that** a stiffener (143) is provided on a surface of the second fastener (14) far away from the battery cell (20).

15. The battery (10) according to any one of claims 1 to 14, **characterized in that** the first fastener (13) comprises at least one pair of the first limiting portions (131), wherein each pair of the first limiting portions (131) are spaced apart from each other in the first direction (X), and the first direction (X) is perpendicular to the extension direction of the fire-extinguishing pipeline (12); and
the second fastener (14) comprises at least one pair of the second limiting portions (141), wherein each pair of the second limiting portions (141) are spaced apart from each other in the first direction (X), and the fire-extinguishing pipeline (12) is provided between each pair of the first limiting portions (131) and between each pair of the second limiting portions (141).

16. The battery (10) according to claim 15, **characterized in that** the second fastener (14) comprises multiple pairs of the second limiting portions (141) arranged along the second direction (Y), wherein the second direction (Y) is perpendicular to the first direction (X), a guide portion (145) is provided between two adjacent pairs of the second limiting portions (141), and the guide portion (145) is configured to guide installation of the second fastener (14);
or
**characterized in that** the second fastener (14) comprises a pair of the second limiting portions (141), wherein the second limiting portion (141) extends along the second direction (Y), and the second direction (Y) is perpendicular to the first direction (X).

17. A method (300) for manufacturing battery, comprising
providing (310) a battery cell (20), wherein a pressure relief mechanism (211) is provided on a first wall (21) of the battery cell (20), and the pressure relief mechanism (211) is configured to actuate release of an internal pressure of the battery cell (20) when the internal pressure or an internal temperature of the battery cell (20) reaches a threshold;
providing (320) a fire-extinguishing pipeline (12), wherein the fire-extinguishing pipeline (12) is configured to accommodate a fire-extinguishing medium, and the fire-extinguishing pipeline (12) is configured to discharge the fire-extinguishing medium during actuation of the pressure relief mechanism (211);
providing (330) a first fastener (13), wherein the first fastener (13) is fastened to a surface of the first wall (21) of the battery cell (20) away from the interior of the battery cell (20), and the first fastener (13) is provided with a first limiting portion (131); and **characterized by**
providing (340) a second fastener (14), wherein the second fastener (14) is provided on a side of the first fastener (13) away from the battery cell (20), the second fastener (14) is provided with a second limiting portion (141), and the second limiting portion (141) cooperates with the first limiting portion (131) to fasten the fire-extinguishing pipeline (12) between the first fastener (13) and the second fastener (14).

## Patentansprüche

1. Batterie (10), umfassend:
eine Batteriezelle (20), wobei ein Druckentlastungsmechanismus (211) an einer ersten Wand (21) der Batteriezelle (20) vorgesehen ist und der Druckentlastungsmechanismus (211) dazu ausgelegt ist, die Abführung eines Innendrucks der Batteriezelle (20) auszulösen, wenn der Innendruck oder
eine Innentemperatur der Batteriezelle (20) einen Schwellenwert erreicht;
eine Feuerlöschleitung (12), die dazu ausgelegt ist, ein Feuerlöschmedium aufzunehmen, wobei die Feuerlöschleitung (12) dazu ausgelegt ist, das Feuerlöschmedium während der Betätigung des Druckentlastungsmechanismus (211) abzugeben;
ein erstes Befestigungselement (13), wobei das erste Befestigungselement (13) an einer Oberfläche der ersten Wand (21) der Batteriezelle (20) auf der dem Inneren der Batteriezelle (20) abgewandten Seite befestigt ist und das erste Befestigungselement (13) mit einem ersten Begrenzungsabschnitt (131) versehen ist, **dadurch gekennzeichnet, dass**
ein zweites Befestigungselement (14) auf einer dem ersten Befestigungselement (13) abgewandten Seite relativ zur Batteriezelle (20) vorgesehen ist, wobei das zweite Befestigungselement (14) mit einem zweiten Begrenzungsabschnitt (141) versehen ist und der zweite Begrenzungsabschnitt (141) mit dem ersten Begrenzungsabschnitt (131) zusammenwirkt, um die Feuerlöschleitung (12) zwischen dem ersten Befestigungselement (13) und dem zweiten Befestigungselement (14) zu befestigen.

2. Batterie (10) nach Anspruch 1, **dadurch gekennzeichnet, dass** der erste Begrenzungsabschnitt (131) eine erste Schlitzstruktur (132) ist, wobei die erste Schlitzstruktur (132) eine erste Schlitzwand (1321) und eine zweite Schlitzwand (1322) umfasst, die auf einer dem ersten Befestigungselement (13) von der Batteriezelle (20) abgewandten Oberfläche vorgesehen sind, wobei die erste Schlitzwand (1321) und die zweite Schlitzwand (1322) entlang einer ersten Richtung (X) angeordnet sind und wobei die erste Richtung (X) senkrecht zu einer Erstreckungsrichtung der Feuerlöschleitung (12) verläuft und wobei der zweite Begrenzungsabschnitt (141) zwischen der ersten Schlitzwand (1321) und der zweiten Schlitzwand (1322) eingespannt ist.

3. Batterie (10) nach Anspruch 2, **dadurch gekennzeichnet, dass** eine erste Begrenzungsstruktur (1321a) an der ersten Schlitzwand (1321) vorgesehen ist, ein erster Vorsprung (1411) auf einer der ersten Schlitzwand (1321) zugewandten Oberfläche des zweiten Begrenzungsabschnitts (141) vorgesehen ist und die erste Begrenzungsstruktur (1321a) mit dem ersten Vorsprung (1411) derart zusammenwirkt, dass der zweite Begrenzungsabschnitt (141) an den ersten Begrenzungsabschnitt (131) angepasst ist; und/oder
eine zweite Begrenzungsstruktur (1322a) an der zweiten Schlitzwand (1322) vorgesehen ist, ein zweiter Vorsprung (1412) auf einer der zweiten Schlitzwand (1322) zugewandten Oberfläche des zweiten Begrenzungsabschnitts (141) vorgesehen ist und die zweite Begrenzungsstruktur (1322a) mit dem zweiten Vorsprung (1412) derart zusammenwirkt, dass der zweite Begrenzungsabschnitt (141) an den ersten Begrenzungsabschnitt (131) angepasst ist.

4. Batterie (10) nach Anspruch 3, **dadurch gekennzeichnet, dass** die erste Begrenzungsstruktur (1321a) ein erstes Durchgangsloch ist, das in der ersten Schlitzwand (1321) vorgesehen ist; und/oder
die zweite Begrenzungsstruktur (1322a) ein zweites Durchgangsloch ist, das in der zweiten Schlitzwand (1322) vorgesehen ist.

5. Batterie (10) nach Anspruch 3, **dadurch gekennzeichnet, dass** die erste Begrenzungsstruktur (1321a) ein dritter Vorsprung (1321a) ist, der an der ersten Schlitzwand (1321) vorgesehen ist, wobei der dritte Vorsprung (1321a) an einem der Batteriezelle (20) abgewandten Ende der ersten Schlitzwand (1321) vorgesehen ist und sich in Richtung des zweiten Begrenzungsabschnitts (141) erstreckt; und/oder
die zweite Begrenzungsstruktur (1322a) ein vierter Vorsprung (1322a) ist, der an der zweiten Schlitzwand (1322) vorgesehen ist, wobei der vierte Vorsprung (1322a) an einem der Batteriezelle (20) abgewandten Ende der zweiten Schlitzwand (1322) vorgesehen ist und sich in Richtung des zweiten Begrenzungsabschnitts (141) erstreckt.

6. Batterie (10) nach Anspruch 5, **dadurch gekennzeichnet, dass** eine erste geneigte Fläche (1411a) an einem der Batteriezelle (20) zugewandten Ende des ersten Vorsprungs (1411) vorgesehen ist, eine dritte geneigte Fläche (1321b) an einem der Batteriezelle (20) abgewandten Ende des dritten Vorsprungs (1321a) vorgesehen ist, und die erste geneigte Fläche (1411a) und die dritte geneigte Fläche (1321b) einander entsprechen und jeweils in Bezug auf eine Ebene geneigt sind, in der sich die erste Wand (21) befindet; und/oder
eine zweite geneigte Fläche (1412a) an einem der Batteriezelle (20) zugewandten Ende des zweiten Vorsprungs (1412) vorgesehen ist, eine vierte geneigte Fläche (1322b) an einem der Batteriezelle (20) abgewandten Ende des vierten Vorsprungs (1322a) vorgesehen ist, und die zweite geneigte Fläche (1412a) und die vierte geneigte Fläche (1322b) einander entsprechen und jeweils in Bezug auf eine Ebene geneigt sind, in der sich die erste Wand (21) befindet.

7. Batterie (10) nach Anspruch 1, **dadurch gekennzeichnet, dass** der zweite Begrenzungsabschnitt (141) eine zweite Schlitzstruktur (142) ist, wobei die zweite Schlitzstruktur (142) eine dritte Schlitzwand (1421) und eine vierte Schlitzwand (1422) umfasst, die auf einer dem zweiten Befestigungselement (14) zur Batteriezelle (20) zugewandten Oberfläche vorgesehen sind, wobei die dritte Schlitzwand (1421) und die vierte Schlitzwand (1422) entlang einer ersten Richtung (X) angeordnet sind, und wobei die erste Richtung (X) senkrecht zu einer Erstreckungsrichtung der Feuerlöschleitung (12) verläuft; und wobei der erste Begrenzungsabschnitt (131) zwischen der dritten Schlitzwand (1421) und der vierten Schlitzwand (1422) eingespannt ist.

8. Batterie (10) nach Anspruch 7, **dadurch gekennzeichnet, dass** die dritte Schlitzwand (1421) mit einer dritten Begrenzungsstruktur (1421a) versehen ist, ein fünfter Vorsprung (1311) auf einer der dritten Schlitzwand (1421) zugewandten Oberfläche des ersten Begrenzungsabschnitts (131) vorgesehen ist und die dritte Begrenzungsstruktur (1421a) mit dem fünften Vorsprung (1311) derart zusammenwirkt, dass der zweite Begrenzungsabschnitt (141) an den ersten Begrenzungsabschnitt (131) angepasst ist; und/oder
die vierte Schlitzwand (1422) mit einer vierten Begrenzungsstruktur (1422a) versehen ist, ein sechster Vorsprung (1312) auf einer der vierten Schlitzwand (1422) zugewandten Oberfläche des ersten Begrenzungsabschnitts (131) vorgesehen ist und die vierte Begrenzungsstruktur (1422a) mit dem sechsten Vorsprung (1312) derart zusammenwirkt, dass der zweite Begrenzungsabschnitt (141) an den ersten Begrenzungsabschnitt (131) angepasst ist.

9. Batterie (10) nach Anspruch 8, **dadurch gekennzeichnet, dass** die dritte Begrenzungsstruktur (1421a) ein drittes Durchgangsloch ist, das in der dritten Schlitzwand (1421) vorgesehen ist; und/oder
die vierte Begrenzungsstruktur (1422a) ein viertes Durchgangsloch ist, das in der vierten Schlitzwand (1422) vorgesehen ist.

10. Batterie (10) nach Anspruch 8, **dadurch gekennzeichnet, dass** die dritte Begrenzungsstruktur (1421a) ein siebter Vorsprung (1421a) ist, der an der dritten Schlitzwand (1421) vorgesehen ist, wobei der siebte Vorsprung (1421a) an einem Ende der dritten Schlitzwand (1421) vorgesehen ist, das der Batteriezelle (20) zugewandt ist und in Richtung des ersten Begrenzungsabschnitts (131) vorsteht; und/oder
die vierte Begrenzungsstruktur (1422a) ein achter Vorsprung (1422a) ist, der an der vierten Schlitzwand (1422) vorgesehen ist, wobei der achte Vorsprung (1422a) an einem Ende der vierten Schlitzwand (1422) vorgesehen ist, das der Batteriezelle (20) zugewandt ist und in Richtung des ersten Begrenzungsabschnitts (131) vorsteht.

11. Batterie (10) nach Anspruch 10, **dadurch gekennzeichnet, dass** eine fünfte geneigte Fläche (1311a) an einem der Batteriezelle (20) abgewandten Ende des fünften Vorsprungs (1311) vorgesehen ist, eine siebte geneigte Fläche (1421b) an einem der Batteriezelle (20) zugewandten Ende des siebten Vorsprungs (1421a) vorgesehen ist, und die fünfte geneigte Fläche (1311a) und die siebte geneigte Fläche (1421b) einander entsprechen und jeweils in Bezug auf eine Ebene geneigt sind, in der sich die erste Wand (21) befindet; und/oder
eine sechste geneigte Fläche (1312a) an einem der Batteriezelle (20) abgewandten Ende des sechsten Vorsprungs (1312) vorgesehen ist, eine achte geneigte Fläche (1422b) an einem der Batteriezelle (20) zugewandten Ende des achten Vorsprungs (1422a) vorgesehen ist, und die sechste geneigte Fläche (1312a) und die achte geneigte Fläche (1422b) einander entsprechen und jeweils in Bezug auf eine Ebene geneigt sind, in der sich die erste Wand (21) befindet.

12. Batterie (10) nach einem der Ansprüche 1 bis 11, **dadurch gekennzeichnet, dass** die Batterie (10) mehrere Batteriezellen (20), die entlang einer zweiten Richtung (Y) angeordnet sind, mehrere erste Befestigungselemente (13), die entlang der zweiten Richtung (Y) angeordnet sind, und mindestens ein zweites Befestigungselement (14) umfasst und sich die Feuerlöschleitung (12) entlang der zweiten Richtung (Y) erstreckt.

13. Batterie (10) nach Anspruch 12, **dadurch gekennzeichnet, dass** die Batterie (10) mehrere zweite Befestigungselemente (14) umfasst, wobei die mehreren zweiten Befestigungselemente (14) in Eins-zu-Eins-Übereinstimmung mit den mehreren ersten Befestigungselementen (13) stehen;
oder
**dadurch gekennzeichnet, dass** das zweite Befestigungselement (14) den mehreren ersten Befestigungselementen (13) entspricht.

14. Batterie (10) nach einem der Ansprüche 1 bis 13, **dadurch gekennzeichnet, dass** ein Versteifungselement (143) auf einer der Batteriezelle (20) abgewandten Oberfläche des zweiten Befestigungselements (14) vorgesehen ist.

15. Batterie (10) nach einem der Ansprüche 1 bis 14, **dadurch gekennzeichnet, dass** das erste Befestigungselement (13) mindestens ein Paar der ersten Begrenzungsabschnitte (131) umfasst, wobei jedes Paar der ersten Begrenzungsabschnitte (131) in der ersten Richtung (X) voneinander beabstandet ist und die erste Richtung (X) senkrecht zur Erstreckungsrichtung der Feuerlöschleitung (12) ist; und
das zweite Befestigungselement (14) mindestens ein Paar der zweiten Begrenzungsabschnitte (141) umfasst, wobei jedes Paar der zweiten Begrenzungsabschnitte (141) in der ersten Richtung (X) voneinander beabstandet ist und die Feuerlöschleitung (12) zwischen jedem Paar der ersten Begrenzungsabschnitte (131) und zwischen jedem Paar der zweiten Begrenzungsabschnitte (141) vorgesehen ist.

16. Batterie (10) nach Anspruch 15, **dadurch gekennzeichnet, dass** das zweite Befestigungselement (14) mehrere Paare der zweiten Begrenzungsabschnitte (141) umfasst, die entlang der zweiten Richtung (Y) angeordnet sind, wobei die zweite Richtung (Y) senkrecht zur ersten Richtung (X) ist, ein Führungsabschnitt (145) zwischen zwei benachbarten Paaren der zweiten Begrenzungsabschnitte (141) vorgesehen ist und der Führungsabschnitt (145) dazu ausgelegt ist, die Installation des zweiten Befestigungselements (14) zu führen;
oder
**dadurch gekennzeichnet, dass** das zweite Befestigungselement (14) ein Paar der zweiten Begrenzungsabschnitte (141) umfasst, wobei sich der zweite Begrenzungsabschnitt (141) entlang der zweiten Richtung (Y) erstreckt und die zweite Richtung (Y) senkrecht zur ersten Richtung (X) ist.

17. Verfahren (300) zum Herstellen einer Batterie, umfassend:
Bereitstellen (310) einer Batteriezelle (20), wobei ein Druckentlastungsmechanismus (211) an einer ersten Wand (21) der Batteriezelle (20) vorgesehen ist und der Druckentlastungsmechanismus (211) dazu ausgelegt ist, das Abführen eines Innendrucks der Batteriezelle (20) auszulösen, wenn der Innendruck oder eine Innentemperatur der Batteriezelle (20) einen Schwellenwert erreicht;
Bereitstellen (320) einer Feuerlöschleitung (12), wobei die Feuerlöschleitung (12) dazu ausgelegt ist, ein Feuerlöschmittel aufzunehmen, und wobei die Feuerlöschleitung (12) dazu ausgelegt ist, das Feuerlöschmittel während der Betätigung des Druckentlastungsmechanismus (211) abzugeben;
Bereitstellen (330) eines ersten Befestigungselements (13), wobei das erste Befestigungselement (13) an einer Oberfläche der ersten Wand (21) der Batteriezelle (20) auf der dem Inneren der Batteriezelle (20) abgewandten Seite befestigt ist und das erste Befestigungselement (13) mit einem ersten Begrenzungsabschnitt (131) versehen ist; und **gekennzeichnet durch** Bereitstellen (340) eines zweiten Befestigungselements (14), wobei das zweite Befestigungselement (14) auf einer dem ersten Befestigungselement (13) von der Batteriezelle (20) abgewandten Seite vorgesehen ist, wobei das zweite Befestigungselement (14) mit einem zweiten Begrenzungsabschnitt (141) versehen ist und der zweite Begrenzungsabschnitt (141) mit dem ersten Begrenzungsabschnitt (131) zusammenwirkt, um die Feuerlöschleitung (12) zwischen dem ersten Befestigungselement (13) und dem zweiten Befestigungselement (14) zu befestigen.

## Revendications

1. Batterie (10), comprenant :
un élément de batterie (20), dans laquelle un mécanisme de décharge de pression (211) est fourni sur une première paroi (21) de l'élément de batterie (20), et le mécanisme de décharge de pression (211) est configuré pour actionner la libération d'une pression interne de l'élément de batterie (20) lorsque la pression interne ou une température interne de l'élément de batterie (20) atteint un seuil ;
une conduite d'extinction d'incendie (12) configurée pour loger un milieu d'extinction d'incendie, dans laquelle la conduite d'extinction d'incendie (12) est configurée pour évacuer le milieu d'extinction d'incendie pendant l'actionnement du mécanisme de décharge de pression (211) ;
un premier élément de fixation (13), dans laquelle le premier élément de fixation (13) est fixé à une surface de la première paroi (21) de l'élément de batterie (20) à l'écart de l'intérieur de l'élément de batterie (20), et le premier élément de fixation (13) est pourvu d'une première portion de limitation (131), **caractérisée en ce que**
un deuxième élément de fixation (14) est fourni sur un côté du premier élément de fixation (13) à l'écart de l'élément de batterie (20), dans laquelle le deuxième élément de fixation (14) est pourvu d'une deuxième portion de limitation (141), et la deuxième portion de limitation (141) coopère avec la première portion de limitation (131) pour fixer la conduite d'extinction d'incendie (12) entre le premier élément de fixation (13) et le deuxième élément de fixation (14).

2. Batterie (10) selon la revendication 1, **caractérisée en ce que** la première portion de limitation (131) est une première structure de fente (132), dans laquelle la première structure de fente (132) comprend une première paroi de fente (1321) et une deuxième paroi de fente (1322) qui sont fournies sur une surface du premier élément de fixation (13) à l'écart de l'élément de batterie (20), la première paroi de fente (1321) et la deuxième paroi de fente (1322) étant agencées le long d'une première direction (X), et la première direction (X) étant perpendiculaire à une direction d'extension de la conduite d'extinction d'incendie (12) ; et la deuxième portion de limitation (141) est serrée entre la première paroi de fente (1321) et la deuxième paroi de fente (1322).

3. Batterie (10) selon la revendication 2, **caractérisée en ce qu'**une première structure de limitation (1321a) est fournie sur la première paroi de fente (1321), une première saillie (1411) est fournie sur une surface de la deuxième portion de limitation (141) tournée vers la première paroi de fente (1321), et la première structure de limitation (1321a) coopère avec la première saillie (1411) de telle sorte que la deuxième portion de limitation (141) est montée sur la première portion de limitation (131) ; et/ou
une deuxième structure de limitation (1322a) est fournie sur la deuxième paroi de fente (1322), une deuxième saillie (1412) est fournie sur une surface de la deuxième portion de limitation (141) tournée vers la deuxième paroi de fente (1322), et la deuxième structure de limitation (1322a) coopère avec la deuxième saillie (1412) de telle sorte que la deuxième portion de limitation (141) est montée sur la première portion de limitation (131).

4. Batterie (10) selon la revendication 3, **caractérisée en ce que** la première structure de limitation (1321a) est un premier trou traversant fourni dans la première paroi de fente (1321) ; et/ou
la deuxième structure de limitation (1322a) est un deuxième trou traversant fourni dans la deuxième paroi de fente (1322).

5. Batterie (10) selon la revendication 3, **caractérisée en ce que** la première structure de limitation (1321a) est une troisième saillie (1321a) fournie sur la première paroi de fente (1321), dans laquelle la troisième saillie (1321a) est fournie au niveau d'une extrémité de la première paroi de fente (1321) à l'écart de l'élément de batterie (20) et fait saillie vers la deuxième portion de limitation (141) ; et/ou
la deuxième structure de limitation (1322a) est une quatrième saillie (1322a) fournie sur la deuxième paroi de fente (1322), dans laquelle la quatrième saillie (1322a) est fournie au niveau d'une extrémité de la deuxième paroi de fente (1322) à l'écart de l'élément de batterie (20) et fait saillie vers la deuxième portion de limitation (141).

6. Batterie (10) selon la revendication 5, **caractérisée en ce qu'**une première surface inclinée (1411a) est fournie au niveau d'une extrémité de la première saillie (1411) proche de l'élément de batterie (20), une troisième surface inclinée (1321b) est fournie au niveau d'une extrémité de la troisième saillie (1321a) loin de l'élément de batterie (20), et la première surface inclinée (1411a) et la troisième surface inclinée (1321b) correspondent l'une à l'autre et sont respectivement inclinées par rapport à un plan dans lequel la première paroi (21) est située ; et/ou une deuxième surface inclinée (1412a) est fournie au niveau d'une extrémité de la deuxième saillie (1412) proche de l'élément de batterie (20), une quatrième surface inclinée (1322b) est fournie au niveau d'une extrémité de la quatrième saillie (1322a) loin de l'élément de batterie (20), et la deuxième surface inclinée (1412a) et la quatrième surface inclinée (1322b) correspondent l'une à l'autre et sont respectivement inclinées par rapport à un plan dans lequel la première paroi (21) est située.

7. Batterie (10) selon la revendication 1, **caractérisée en ce que** la deuxième portion de limitation (141) est une deuxième structure de fente (142), dans laquelle la deuxième structure de fente (142) comprend une troisième paroi de fente (1421) et une quatrième paroi de fente (1422) qui sont fournies sur une surface du deuxième élément de fixation (14) tournée vers l'élément de batterie (20), la troisième paroi de fente (1421) et la quatrième paroi de fente (1422) étant agencées le long d'une première direction (X), la première direction (X) étant perpendiculaire à une direction d'extension de la conduite d'extinction d'incendie (12) ; et la première portion de limitation (131) est serrée entre la troisième paroi de fente (1421) et la quatrième paroi de fente (1422).

8. Batterie (10) selon la revendication 7, **caractérisée en ce que** la troisième paroi de fente (1421) est pourvue d'une troisième structure de limitation (1421a), une cinquième saillie (1311) est fournie sur une surface de la première portion de limitation (131) tournée vers la troisième paroi de fente (1421), et la troisième structure de limitation (1421a) coopère avec la cinquième saillie (1311) de telle sorte que la deuxième portion de limitation (141) est montée sur la première portion de limitation (131) ; et/ou
la quatrième paroi de fente (1422) est pourvue d'une quatrième structure de limitation (1422a), une sixième saillie (1312) est fournie sur une surface de la première portion de limitation (131) tournée vers la quatrième paroi de fente (1422), et la quatrième structure de limitation (1422a) coopère avec la sixième saillie (1312) de telle sorte que la deuxième portion de limitation (141) est montée sur la première portion de limitation (131).

9. Batterie (10) selon la revendication 8, **caractérisée en ce que** la troisième structure de limitation (1421a) est un troisième trou traversant fourni dans la troisième paroi de fente (1421) ; et/ou
la quatrième structure de limitation (1422a) est un quatrième trou traversant fourni dans la quatrième paroi de fente (1422).

10. Batterie (10) selon la revendication 8, **caractérisée en ce que** la troisième structure de limitation (1421a) est une septième saillie (1421a) fournie sur la troisième paroi de fente (1421), dans laquelle la septième saillie (1421a) est fournie au niveau d'une extrémité de la troisième paroi de fente (1421) tournée vers l'élément de batterie (20) et fait saillie vers la première portion de limitation (131) ; et/ou
la quatrième structure de limitation (1422a) est une huitième saillie (1422a) fournie sur la quatrième paroi de fente (1422), dans laquelle la huitième saillie (1422a) est fournie au niveau d'une extrémité de la quatrième paroi de fente (1422) tournée vers l'élément de batterie (20) et fait saillie vers la première portion de limitation (131).

11. Batterie (10) selon la revendication 10, **caractérisée en ce qu'**une cinquième surface inclinée (1311a) est fournie au niveau d'une extrémité de la cinquième saillie (1311) loin de l'élément de batterie (20), une septième surface inclinée (1421b) est fournie au niveau d'une extrémité de la septième saillie (1421a) proche de l'élément de batterie (20), et la cinquième surface inclinée (1311a) et la septième surface inclinée (1421b) correspondent l'une à l'autre et sont respectivement inclinées par rapport à un plan dans lequel la première paroi (21) est située ; et/ou
une sixième surface inclinée (1312a) est fournie au niveau d'une extrémité de la sixième saillie (1312) loin de l'élément de batterie (20), une huitième surface inclinée (1422b) est fournie au niveau d'une extrémité de la huitième saillie (1422a) proche de l'élément de batterie (20), et la sixième surface inclinée (1312a) et la huitième surface inclinée (1422b) correspondent l'une à l'autre et sont respectivement inclinées par rapport à un plan dans lequel la première paroi (21) est située.

12. Batterie (10) selon l'une quelconque des revendications 1 à 11, **caractérisée en ce que** la batterie (10) comprend de multiples éléments de batterie (20) agencés le long d'une deuxième direction (Y), de multiples premiers éléments de fixation (13) agencés le long de la deuxième direction (Y), et au moins un deuxième élément de fixation (14), et la conduite d'extinction d'incendie (12) s'étend le long de la deuxième direction (Y).

13. Batterie (10) selon la revendication 12, **caractérisée en ce que** la batterie (10) comprend de multiples deuxièmes éléments de fixation (14), dans laquelle les multiples deuxièmes éléments de fixation (14) sont en correspondance biunivoque avec les multiples premiers éléments de fixation (13) ;
ou
**caractérisée en ce que** le deuxième élément de fixation (14) correspond aux multiples premiers éléments de fixation (13).

14. Batterie (10) selon l'une quelconque des revendications 1 à 13, **caractérisée en ce qu'**un raidisseur (143) est fourni sur une surface du deuxième élément de fixation (14) loin de l'élément de batterie (20).

15. Batterie (10) selon l'une quelconque des revendications 1 à 14, **caractérisée en ce que** le premier élément de fixation (13) comprend au moins une paire des premières portions de limitation (131), dans laquelle chaque paire des premières portions de limitation (131) est espacée l'une de l'autre dans la première direction (X), et la première direction (X) est perpendiculaire à la direction d'extension de la conduite d'extinction d'incendie (12) ; et
le deuxième élément de fixation (14) comprend au moins une paire de deuxièmes portions de limitation (141), dans laquelle chaque paire de deuxièmes portions de limitation (141) est espacée l'une de l'autre dans la première direction (X), et la conduite d'extinction d'incendie (12) est fournie entre chaque paire de premières portions de limitation (131) et entre chaque paire de deuxièmes portions de limitation (141).

16. Batterie (10) selon la revendication 15, **caractérisée en ce que** le deuxième élément de fixation (14) comprend de multiples paires des deuxièmes portions de limitation (141) agencées le long de la deuxième direction (Y), dans laquelle la deuxième direction (Y) est perpendiculaire à la première direction (X), une portion de guidage (145) est fournie entre deux paires adjacentes des deuxièmes portions de limitation (141), et la portion de guidage (145) est configurée pour guider l'installation du deuxième élément de fixation (14) ;
ou
**caractérisée en ce que** le deuxième élément de fixation (14) comprend une paire des deuxièmes portions de limitation (141), dans laquelle la deuxième portion de limitation (141) s'étend selon la deuxième direction (Y), et la deuxième direction (Y) est perpendiculaire à la première direction (X).

17. Procédé (300) de fabrication d'une batterie, comprenant :
la fourniture (310) d'un élément de batterie (20), dans lequel un mécanisme de décharge de pression (211) est fourni sur une première paroi (21) de l'élément de batterie (20), et le mécanisme de décharge de pression (211) est configuré pour actionner la libération d'une pression interne de l'élément de batterie (20) lorsque la pression interne ou une température interne de l'élément de batterie (20) atteint un seuil ;
la fourniture (320) d'une conduite d'extinction d'incendie (12), dans lequel la conduite d'extinction d'incendie (12) est configurée pour loger un milieu d'extinction d'incendie, et la conduite d'extinction d'incendie (12) est configurée pour évacuer le milieu d'extinction d'incendie pendant l'actionnement du mécanisme de décharge de pression (211) ;
la fourniture (330) d'un premier élément de fixation (13), dans lequel le premier élément de fixation (13) est fixé à une surface de la première paroi (21) de l'élément de batterie (20) à l'écart de l'intérieur de l'élément de batterie (20), et le premier élément de fixation (13) est pourvu d'une première portion de limitation (131) ; et **caractérisé par**
la fourniture (340) d'un deuxième élément de fixation (14), dans lequel le deuxième élément de fixation (14) est fourni sur un côté du premier élément de fixation (13) à l'écart de l'élément de batterie (20), le deuxième élément de fixation (14) est pourvu d'une deuxième portion de limitation (141), et la deuxième portion de limitation (141) coopère avec la première portion de limitation (131) pour fixer la conduite d'extinction d'incendie (12) entre le premier élément de fixation (13) et le deuxième élément de fixation (14).
